# EUROPÄISCHE PATENTSCHRIFT

(11) **EP 2 572 950 B1**
(45) Veröffentlichungstag und Bekanntmachung des Hinweises auf die Patenterteilung: **06.11.2019**
(21) Anmeldenummer: 12185305.5
(22) Anmeldetag: 20.09.2012
(51) Int. Cl.: B60T 13/66, B60T 13/68

(54) **Elektrisch betätigbare Feststellbremseinrichtung**
Electrically operated parking brake device
Dispositif de frein de stationnement pouvant être actionné électriquement

(30) Priorität: 22.09.2011 DE 102011114071
(43) Veröffentlichungstag der Anmeldung: 27.03.2013
(73) Patentinhaber: KNORR-BREMSE Systeme für Nutzfahrzeuge GmbH, 80809 München (DE)
(72) Erfinder: Leinung, Andreas, 81245 München (DE); Schnittger, Karssten, 80935 München (DE); Wyen, Stefan, 80937 München (DE)
(74) Vertreter: Mattusch, Gundula

(56) Entgegenhaltungen:
- EP-A1- 1 504 975
- EP-A2- 2 239 174
- DE-A1-102007 008 504
- DE-A1-102009 037 636
- DE-B3-102008 007 877

## Beschreibung

Die vorliegende Erfindung betrifft eine elektrisch betätigbare Feststellbremseinrichtung.

Die vorliegende Offenbarung betrifft elektrisch betätigbare Feststellbremseinrichtungen, wie sie beispielsweise aus der DE 10 2008 007 877 B3 bekannt sind.

Die EP 2 239 174 A2 beschreibt ferner ein bistabiles Ventil mit elektromotorischer Betätigung.

Derartige Feststellbremseinrichtungen umfassen als zentrales Schaltelement ein pneumatisch ansteuerbares 3/2-Wegeventil. Dieses Schaltelement muss unabhängig von einem eventuell für die Feststellbremseinrichtung bereitgestellten Versorgungsdruck zuverlässig seinen aktuellen Schaltzustand halten, um Funktionsstörungen zu verhindern, beispielsweise ein unerwünschtes Lösen oder Schließen, das heißt eine plötzliche unerwünschte Änderung der von der Feststellbremseinrichtung erbrachten Bremswirkung. Diese Forderung ist nur schwer erfüllbar, wenn die von der Feststellbremseinrichtung bereitgestellte Bremswirkung beliebig stufbar sein soll, da dann ein pneumatischer Druck an angeschlossenen Federspeicherbremszylindern üblicherweise in Anhängigkeit von der gewünschten Bremswirkung variiert werden muss. Insbesondere nahe 0 bar, wobei 0 bar dem Umgebungsdruck entspricht, kann dann eine an dem 3/2-Wegeventil notwendigerweise vorgesehene Feder zur Erzeugung einer Rückstellkraft zu einem unerwünschten Schalten des 3/2-Wegeventils führen. Das 3/2-Wegeventil fällt in seinen "anderen" Schaltzustand, wodurch die Feststellbremseinrichtung geschlossen wird. Der geöffnete Schaltzustand der Feststellbremseinrichtung, bei dem angesteuerte Federspeicherbremszylinder zumindest teilweise belüftet sind, ist also als nicht umsetzbar ohne bistabiles Venil anzusehen, wenn eine beliebig stufbare Feststellbremswirkung gefordert wird.

Weiterhin sind auch Leckagen in der Feststellbremseinrichtung problematisch, die beispielsweise bei kalten Witterungen an einem angeschlossenen Anhängersteuerventil auftreten können. Ein Druckverlust an dem Anhängersteuerventil muss zeitnah vollständig ersetzt werden, so dass große Ventil- und Leitungsquerschnitte für die verwendeten Komponenten der Feststellbremsventileinrichtung notwendig sind, um Fehlfunktionen zu vermeiden. Umgekehrt müssen unerwünschte Druckanstiege durch Leckagen des Anhängersteuerventils über die vorhandenen Entlüftungen schnell und zuverlässig aus der Feststellbremseinrichtung abgeführt werden.

Für das Ersetzen und das Abführen sind jeweils große freigebbare Ventil- und Leitungsquerschnitte notwendig, was jedoch die notwendigen Schaltkräfte und die Kosten erhöht.

Der vorliegenden Erfindung liegt die Aufgabe zugrunde eine Feststellbremseinrichtung bereitzustellen, die eine beliebig stufbare Feststellbremswirkung erlaubt.

Diese Aufgabe wird mit den Merkmalen des unabhängigen Anspruchs gelöst.

Die Erfindung besteht aus einer Feststellbremseinrichtung umfassend ein elektrisch betätigbares bistabiles Ventil mit einem ersten Anschluss, der über einen ersten Leitungsabschnitt mit einem Druckluftversorgungseingang der Feststellbremseinrichtung gekoppelt ist und über einen zweiten Leitungsabschnitt mit einem ersten Ausgangsanschluss für ein Anhängersteuermodul gekoppelt ist, einem zweiten Anschluss, der direkt oder indirekt eine Druckänderung an einem Federspeicherbremszylinderanschluss bewirkt und der über einen vierten Leitungsabschnitt mit einem zweiten Ausgangsanschluss für ein Anhängersteuermodul gekoppelt ist, einem dritten Anschluss, der mit einer Entlüftung gekoppelt ist, und einem Elektro-motor, der über einen Trieb das elektrisch betätigbare bistabile Ventil zwischen einer ersten Schaltposition und einer zweiten Schaltposition schaltet, umfassen. Auf diese Weise kann bei beliebigen an den drei Anschlüssen anstehenden Druckniveaus eine stabile Schaltposition des Ventils gewährleistet werden. Dies erlaubt die Bereitstellung einer beliebig stufbaren Feststellbremswirkung, wobei der bereitgestellte Steuerdruck bis hinab zu 0 bar regelbar ist. Als elektrisch betätigbares bistabiles Ventil, das bei Ausfall eines ansteuernden Schaltimpulses seine momentane Schaltposition zuverlässig beibehält, kann beispielsweise ein beliebiges Bistabilventil mit elektromotorischer Betätigung und Selbsthemmung verwendet werden. Beispielhaft sind einige spezielle Ausführungsformen entsprechender Bistabilventile in der vorliegenden Beschreibung angegeben.

Erfindungsgemäß ist weiterhin ein Relaisventil mit einem pneumatischen Steuereingang vorgesehen, wobei der pneumatische Steuereingang mit über den dritten Leitungsabschnitt mit dem zweiten Anschluss gekoppelt ist, um die Druckänderung an dem Federspeicherbremszylinderanschluss indirekt zu bewirken. Durch die Ansteuerung von angeschlossenen Federspeicherbremszylindern über das Relaisventil kann die über das bistabile Ventil fließende Luftmenge beschränkt werden. Es wird nur der Steuerdruck an dem pneumatischen Steuereingang bereitgestellt. Das eigentliche deutlich größere Luftvolumen zum Belüften angeschlossener Federspeicherbremszylinder wird jedoch über das Relaisventil bereitgestellt, welches einen nochmals vergrößerten Ventilquerschnitt bereitstellen kann.

Erfindungsgemäß ist vorgesehen, dass im dritten Leitungsabschnitt eine Bremstestventileinrichtung angeordnet ist, die geeignet ist, den pneumatischen Steuereingang unabhängig von einem am zweiten Anschluss bereitgestellten Druckniveau zu entlüften. Die Bremstestventileinrichtung kann zur Realisierung eines Anhängertests genutzt werden, bei dem das gesamte Fahrzeug von der Feststellbremse des Zugfahrzeugs gehalten werden muss.

Vorzugsweise kann vorgesehen sein, dass in dem ersten Leitungsabschnitt eine Ventileinrichtung angeordnet ist, die dazu geeignet ist, die Feststellbremseinrichtung von dem Druckluftversorgungseingang zu trennen und den ersten Leitungsabschnitt zu entlüften.

Es kann weiterhin vorgesehen sein, dass die Ventileinrichtung ein erstes 2/2-Wegeventil und ein zweites 2/2-Wegeventil umfasst.

Nützlicherweise kann vorgesehen sein, dass das erste 2/2-Wegeventil und/oder das zweite 2/2-Wegeventil als zwangsgesteuerte Membranventile ausgeführt sind. Zwangsgesteuerte Membranventile können große Ventilquerschnitte bei gleichzeitig sehr geringen Schaltkräften bereitstellen. Weiterhin wird zum Schalten eines zwangsgesteuerten Membranventils kein Differenzdruck benötigt. Das erste 2/2-Wegeventil und das zweite 2/2-Wegeventil können daher bei beliebigen Druckniveaus geschaltet werden.

Zusätzlich kann auch vorgesehen sein, dass die Feststellbremseinrichtung ein elektronisches Steuergerät umfasst. Ein eigenes elektronisches Steuergerät als Teil der Feststellbremseinrichtung ermöglicht eine flexible Integration der Feststellbremseinrichtung in unterschiedliche Fahrzeuge, wobei auf andere vorhandene Komponenten, beispielsweise der Betriebsbremse keine Rücksicht genommen werden muss.

Es kann auch vorgesehen sein, dass in dem dritten Leitungsabschnitt ein Select-High-Ventil angeordnet ist, welches weiterhin mit einer Steuerleitung aus einem Betriebsbremskreis gekoppelt ist. Durch das Select-High-Ventil kann eine Überbelastung von angesteuerten Federspeicherbremszylindern verhindert werden, wenn der Feststellbremsteil des Federspeicherbremszylinders gelöst wird, wenn der Betriebsbremsteil des Federspeicherbremszylinders belüftet wird.

Ein elektrisch betätigbares bistabiles Ventil umfasst ein Ventilgehäuse, ein in einer axialen Richtung gegenüber dem Ventilgehäuse bewegbares Schaltelement, einen Elektromotor, der über einen selbsthemmenden Trieb mit dem bewegbaren Schaltelement gekoppelt ist, und einen ersten Ventilsitz und einen zweiten Ventilsitz, wobei der erste Ventilsitz und der zweite Ventilsitz in der axialen Richtung voneinander beabstandet angeordnet sind und jeweils gegenüber dem Ventilgehäuse des elektrisch betätigbaren bistabilen Ventils festgelegt sind, und wobei das bewegbare Schaltelement in einer ersten Schaltposition an dem ersten Ventilsitz dicht anliegt und in einer zweiten Schaltposition an dem zweiten Ventilsitz dicht anliegt. Das Vorsehen zweier voneinander axial beabstandeter getrennter Ventilsitze, an denen das bewegbare Schaltelement abwechselnd dicht anliegen kann, ermöglicht einen großen freigebbaren Ventilquerschnitt. Gleichzeitig können die von dem Elektromotor aufzubringenden Schaltkräfte aufgrund der festgelegten Ventilsitze und des bewegbaren Schaltelementes begrenzt werden, da beispielsweise keine Dichtungen notwendig sind, die während einer Bewegung des Schaltelementes zwischen der ersten Schaltposition und der zweiten Schaltposition abdichtend mit bewegt werden müssen.

Nützlicherweise kann vorgesehen sein, dass der Trieb über einen Schlitten mit dem Schaltelement gekoppelt ist, wobei das Schaltelement in der axialen Richtung relativ zu dem Schlitten bewegbar ist. Die Verwendung eines Schlittens zur Kopplung des Triebs mit dem Schaltelement erlaubt eine flexible Lagerung des bewegbaren Schaltelementes im Inneren des Ventilgehäuses, wodurch die Bewegung des Schaltelementes in dem Ventilgehäuse präziser ausgeführt werden kann. Insbesondere in der Ebene senkrecht zu der axialen Richtung können Positionsabweichungen des bewegbaren Schaltelementes reduziert werden. Dies kann zu einer Reduzierung der Schaltkräfte führen.

Vorteilhafterweise kann dabei auch vorgesehen sein, dass der Schlitten eine in einem Federkäfig angeordnete Feder umfasst, die in der axialen Richtung eine Kraft auf das Schaltelement ausübt. Durch die Feder kann die in der axialen Richtung auf das Schaltelement ausgeübte Kraft von der durch den Elektromotor über den Trieb aufgebrachten Kraft zur Positionierung des Schaltelementes teilweise entkoppelt werden, da beide Teile flexibel miteinander verbunden sind. Insbesondere wirkt während der meisten Zeit nur ein Teil der von dem Motor aufgebrachten Kraft auf das bewegbare Schaltelement.

Weiterhin kann vorgesehen sein, dass der Federkäfig innerhalb des Schlittens durch ein feststehendes Sperrelement beschränkt ist. Das Beschränken des Federkäfigs ermöglicht eine Bewegung des Schlittens relativ zu dem Schaltelement, ohne dass durch die in dem Federkäfig angeordnete Feder Kräfte auf das Schaltelement übertragen werden. Dies kann beispielsweise zum kräftefreien "Parken" des Ventils oder zur Kalibrierung des Ventils über die Bestimmung der von dem Elektromotor angefahrenen Position des Schaltelementes genutzt werden.

Insbesondere kann vorgesehen sein, dass der Schlitten eine in einem weiteren Federkäfig angeordnete weitere Feder umfasst, die in der axialen Richtung eine weitere Kraft auf das Schaltelement ausübt, die der Kraft entgegenwirkt. Die von der weiteren Feder auf das Schaltelement ausgeübte weitere Kraft erlaubt eine stabile Schaltposition des Schaltelementes, die das Schaltelement auch bei Erschütterungen, die es aus der vorgesehenen Schaltposition auslenken, sicher in die beabsichtigte Schaltposition zurückführen.

Außerdem kann vorgesehen sein, dass der weitere Federkäfig innerhalb des Schlittens durch ein feststehendes weiteres Sperrelement beschränkt ist. Durch das Beschränken des weiteren Federkäfigs wird wahlweise ein kräftefreier Bereich innerhalb des Schlittens definiert, in welchem das bewegliche Halteelement relativ zu dem Schlitten kräftefrei geparkt werden kann. Möglich ist auch, insbesondere wenn das weitere Sperrelement mit dem Sperrelement übereinstimmt oder das Sperrelement und das weitere Sperrelement in der axialen Richtung so dicht beieinander liegen, dass das bewegliche Schaltelement gleichzeitig durch die Kraft und durch die weitere Kraft beaufschlagt ist, eine Ruhelage des Schaltelementes relativ zu dem Schlitten unter einer Vorspannung zu definieren.

Nützlicherweise kann vorgesehen sein, dass der Schlitten einen Anschlag umfasst, der die relative Bewegbarkeit des Schaltelements gegenüber dem Schlitten begrenzt. Durch den Anschlag wird eine Möglichkeit geschaffen, das Schaltelement mit der gesamten Motorkraft des Elektromotors in der von dem Anschlag wegweisenden Richtung zu bewegen, da diese direkt über den Schlitten auf das Schaltelement übertragen wird, sobald das Schaltelement an dem Anschlag anliegt.

Zusätzlich kann vorgesehen sein, dass der Schlitten einen weiteren Anschlag umfasst, der die relative Bewegbarkeit des Schaltelements gegenüber dem Schlitten begrenzt, so dass das Schaltelement gegenüber dem Schlitten zwischen dem Anschlag und dem weiteren Anschlag relativ bewegbar ist. Der weitere Anschlag ermöglicht die Übertragung der gesamten Motorkraft des Elektromotors auf das Schaltelement in der von dem weiteren Anschlag wegweisenden Richtung, sobald das Schaltelement an dem weiteren Anschlag anliegt. Der Anschlag und der weitere Anschlag können insbesondere im Zusammenhang mit einem Losreißen des Schaltelementes von dem ersten Ventilsitz und dem zweiten Ventilsitz des elektrisch betätigbaren bistabilen Ventils genutzt werden, wenn zwischen dem bewegbaren Schaltelement und dem ersten Ventilsitz oder zwischen dem bewegbaren Schaltelements und dem zweiten Ventilsitz Klebekräfte auftreten, die durch die Feder oder die weitere Feder nicht überwunden werden können. Auf diese Weise kann eine maximale Schaltkraft bereitgestellt werden, die durch den Elektromotor vorgebbar ist.

Es kann auch vorgesehen sein, dass der Trieb mit einem Spiel an den Schlitten gekoppelt ist. Das Spiel erlaubt eine begrenzte relative Bewegung des Triebes gegenüber dem Schlitten in der axialen Richtung, ohne dass Kräfte von dem Trieb auf den Schlitten oder umgekehrt übertragen werden. Auf diese Weise kann eine geringfügige Bewegung des Triebes gegenüber dem Schlitten ohne Änderung der auf das Schaltelement wirkenden Kräfte erfolgen. Das kann stabilisierend auf die Position des Schaltelementes wirken. Beispielsweise kann eine Überwindung der Selbsthemmung des Triebes durch Vibrationen erfolgen, ohne dass diese direkt zu einer Änderung der Schaltposition des bistabilen Ventils führt. In der umgekehrten Richtung kann eine durch Vibrationen verursachte Positionsänderung des Schlittens von dem Elektromotor entkoppelt werden, so dass dieser vor Beschädigungen durch die extern induzierten Bewegungen geschützt ist.

Vorteilhafterweise kann vorgesehen sein, dass das Schaltelement ein Kopfteil umfasst, das in der axialen Richtung zwischen dem ersten Ventilsitz und dem zweiten Ventilsitz hin- und herbewegbar ist. Das Kopfteil kann insbesondere tellerartig ausgeführt sein, wobei die Oberseite des Tellers an dem ersten Ventilsitz und die Unterseite des Tellers an dem zweiten Ventilsitz in Abhängigkeit von der jeweiligen Schaltposition des Schaltelementes dicht anliegen kann. Durch die Verwendung eines Kopfteiles im Bereich der Ventilsitze kann auf eine seitliche Führung des Schaltelementes zwischen den beiden Ventilsitzen verzichtet werden. Dies erlaubt einen großen freigebbaren Ventilquerschnitt und reduziert zugleich die aufzubringende Schaltkraft.

Weiterhin kann vorgesehen sein, dass der Schlitten in der axialen Richtung relativ zu dem Gehäuse bis zu einer Schlittensperre bewegbar ist. Das Vorsehen einer Schlittensperre ermöglicht das Feststellen der axialen Position des Schlittens, indem der Schlitten durch den Elektromotor gegen die Schlittensperre bewegt wird. Dies kann zur Kalibrierung des elektrisch betätigbaren bistabilen Ventils genutzt werden.

In diesem Zusammenhang kann vorgesehen sein, dass der Schlitten in der axialen Richtung zwischen der Schlittensperre und einer weiteren Schlittensperre hin- und herbewegbar ist. Auf diese Weise kann eine Positionsbestimmung des bistabilen Ventils bei jedem Schaltvorgang erfolgen.

Außerdem kann vorgesehen sein, dass das Schaltelement ein in dem Schlitten angeordnetes Fußteil umfasst. Das in dem Schlitten angeordnete Fußteil des Schaltelementes kann beispielsweise zur Führung des gesamten Schaltelementes in der axialen Richtung dienen und weiterhin zur Übertragung von Schaltkräften von dem Schlitten auf das Schaltelement vorgesehen sein. Die Übertragung von Schaltkräften zwischen dem Schlitten und dem Schaltelement kann beispielsweise über Federn oder an dem Schlitten vorgesehene Anschläge erfolgen, die zur Übertragung von Kräften in der axialen Richtung an dem Fußteil anliegen können.

Das Ventil kann vorteilhafterweise in eine elektrisch betätigbare Feststellbremseinrichtung für ein Fahrzeug integriert sein.

Die Erfindung wird im Folgenden anhand bevorzugter Ausführungsformen beispielhaft beschrieben.

Es zeigen:
- Figur 1: ein elektrisch ansteuerbares bistabiles Ventil in einem ersten Schaltzustand;
- Figur 2: ein elektrisch ansteuerbares bistabiles Ventil in einem zweiten Schaltzustand;
- Figur 3: ein elektrisch ansteuerbares bistabiles Ventil in einem dritten Schaltzustand;
- Figur 4: ein elektrisch ansteuerbares bistabiles Ventil in einem vierten Schaltzustand;
- Figur 5: ein elektrisch ansteuerbares bistabiles Ventil in einem fünften Schaltzustand;
- Figur 6: ein weiteres elektrisch ansteuerbares bistabiles Ventil in einem ersten Schaltzustand;
- Figur 7: ein weiteres elektrisch ansteuerbares bistabiles Ventil in einem zweiten Schaltzustand;
- Figur 8: ein weiteres elektrisch ansteuerbares bistabiles Ventil in einem dritten Schaltzustand;
- Figur 9: ein weiteres elektrisch ansteuerbares bistabiles Ventil in einem vierten Schaltzustand;
- Figur 10: eine schematische Darstellung einer elektrisch betätigbaren Feststellbremseinrichtung in einem ersten Schaltzustand;
- Figur 11: eine schematische Darstellung einer weiteren elektrisch betätigbaren Feststellbremseinrichtung in einem ersten Schaltzustand;
- Figur 12: eine schematische Darstellung einer elektrisch betätigbaren Feststellbremseinrichtung in einem zweiten Schaltzustand;
- Figur 13: eine schematische Darstellung einer elektrisch betätigbaren Feststellbremseinrichtung in einem dritten Schaltzustand;
- Figur 14: eine schematische Darstellung einer elektrisch betätigbaren Feststellbremseinrichtung in einem vierten Schaltzustand;
- Figur 15: eine schematische Darstellung einer elektrisch betätigbaren Feststellbremseinrichtung in einem fünften Schaltzustand;
- Figur 16: eine schematische Darstellung einer elektrisch betätigbaren Feststellbremseinrichtung in einem sechsten Schaltzustand; und
- Figur 17: eine schematische Darstellung einer elektrisch betätigbaren Feststellbremseinrichtung in einem siebten Schaltzustand.

In den folgenden Zeichnungen bezeichnen gleiche Bezugszeichen gleiche oder gleichartige Teile.

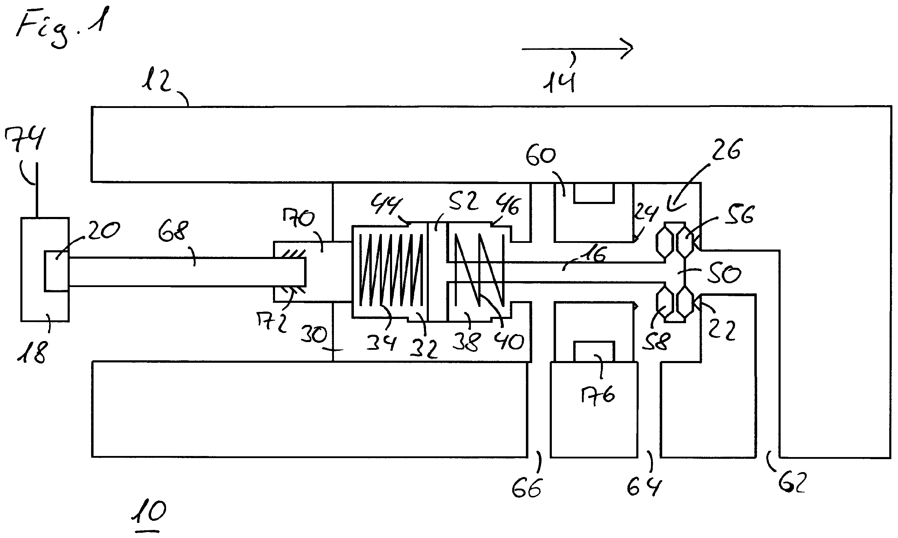

Figur 1 zeigt ein elektrisch ansteuerbares bistabiles Ventil in einem ersten Schaltzustand. In der vorliegenden Beschreibung wird als Schaltzustand allgemein der Zustand des Ventils 10 hinsichtlich der axialen Positionen aller bewegbaren Teile verstanden. Das dargestellte Ventil 10 umfasst ein Ventilgehäuse 12 und einen Elektromotor 18, der über einen elektrischen Anschluss 74 elektrisch ansteuerbar ist. Das Ventilgehäuse 12 weist einen ersten Anschluss 62, einen zweiten Anschluss 64 und einen dritten Anschluss 66 auf. Über den ersten Anschluss 62, den zweiten Anschluss 64 und den dritten Anschluss 66 kann das Ventil 10 beispielsweise an pneumatische Druckluftleitungen einer in der Figur 1 nicht dargestellten Feststellbremsventileinrichtung angeschlossen sein. Das Ventil 10 kann also beispielsweise ein pneumatisches Ventil sein, da pneumatische Druckluftpfade durch das Ventil 10 geöffnet oder geschlossen werden können. Das Innere des Ventilgehäuses 12 kann aus mehreren gegenüber dem Ventilgehäuse 12 beweglichen oder festgelegten Teilen aufgebaut sein, die während des Zusammenbaus des Ventils 10 in das Ventilgehäuse 12 eingesetzt werden können und die über einen Trieb 20 mit dem Elektromotor 18 gekoppelt sind. Der Trieb 20 kann beispielsweise als linearer Spindeltrieb ausgeführt sein, wobei die Bistabilität des Ventils 10 durch eine Selbsthemmung des Triebs 20 ermöglicht oder unterstützt wird. Eine nichtlineare Ausführung des Triebs 20 ist ebenfalls möglich. Durch die Selbsthemmung des Triebs 20 kann auch bei einem Stromausfall an dem Elektromotor 18 ein robuster Betrieb des Ventils 10 sichergestellt werden. Im Inneren des Ventilgehäuses 12 sind ein erster Ventilsitz 22 und ein zweiter Ventilsitz 24 vorgesehen. Der erste Ventilsitz 22 und der zweite Ventilsitz 24 sind in einer axialen Richtung 14 voneinander beabstandet angeordnet und gegenüber dem Ventilgehäuse 12 festgelegt. Die axiale Richtung 14 verläuft parallel zu der durch den Pfeil symbolisierten Richtung. Ein Kopfteil 50 eines in der axialen Richtung 14 bewegbaren Schaltelementes 16 kann wahlweise an dem ersten Ventilsitz 22 oder dem zweiten Ventilsitz 24 dicht anliegen. Auf diese Weise kann im Inneren des Ventils 10 wahlweise ein Strömungsweg zwischen dem ersten Anschluss 62 und dem zweiten Anschluss 64 freigegeben werden, wenn das Kopfteil 50 des Schaltelementes 16 dicht an dem zweiten Ventilsitz 24 anliegt. Aufgrund der fehlenden Reibung von dichtenden O-Ringen sind bei der Bewegung des Schaltelementes 16 nur geringe Reibungskräfte zu überwinden, so dass nur geringe Schaltkräfte aufzubringen sind. Der Grundaufbau des Ventils 10 ähnelt einem druckinduziert schaltenden Select-High-Ventil. Wenn ein Strömungsweg zwischen dem ersten Anschluss 62 und dem zweiten Anschluss 64 freigegeben ist, ist gleichzeitig durch das dichte Anliegen des Kopfteils 50 an dem zweiten Ventilsitz 24 der dritte Anschluss 66 von dem ersten Anschluss 62 und dem zweiten Anschluss 64 getrennt. Liegt hingegen das Kopfteil 50 des Schaltelementes 16 dicht an dem ersten Ventilsitz 22 an, so ist der erste Anschluss 62 von dem zweiten Anschluss 64 und dem dritten Anschluss 66 getrennt, während ein Strömungsweg zwischen dem zweiten Anschluss 64 und dem dritten Anschluss 66 freigegeben ist. Dieser Zustand wird als erste Schaltposition 26 bezeichnet und ist in Figur 1 dargestellt. In der vorliegenden Beschreibung wird allgemein unter einer Schaltposition die axiale Position des Schaltelementes 16 verstanden. Der Schaltzustand des Ventils 10 ist somit durch die Schaltposition des Schaltelementes 16 sowie weitere axiale Positionen bewegbarer Teile des Ventils 10 charakterisiert, beispielsweise eines im Folgenden beschriebenen Schlittens 30. Das in Figur 1 dargestellte Ventil 10 ist aufgrund der drei vorgesehenen Anschlüsse, dem ersten Anschluss 62, dem zweiten Anschluss 64 und dem dritten Anschluss 66, sowie den zwei möglichen Schaltpositionen des bewegbaren Schaltelementes 16 ein 3/2-Wegeventil. Um die Dichtwirkung zwischen dem Kopfteil 50 und dem ersten Ventilsitz 22 zu erhöhen, kann eine Dichtung 56 an dem Kopfteil 50 angeordnet sein. Die Dichtung 56 kann beispielsweise als einfacher flacher Dichtring im Sinne einer Flachdichtung ausgeführt sein, der von dem Kopfteil 50 in der axialen Richtung 14 gegen den ersten Ventilsitz 22 gepresst werden kann. In gleicher Weise kann eine weitere Dichtung 58 zur Verbesserung der Dichtwirkung zwischen dem Kopfteil 50 und dem zweiten Ventilsitz 24 vorgesehen sein. Die weitere Dichtung 58 kann beispielsweise auf der der Dichtung 56 gegenüberliegenden Seite des Kopfteils 50 angeordnet sein und ebenfalls beispielsweise als einfacher Dichtring im Sinne einer Flachdichtung ausgeführt sein, die insbesondere in der axialen Richtung 14 zusammengepresst wird. Die Dichtung 56 und die weitere Dichtung 58 werden unter Berücksichtigung der im Ventil 10 insgesamt auftretenden Druckverhältnisse im Betrieb seitenungleich nur minimal belastet. Der zweite Ventilsitz 24 kann an einer Drossel 60 angeordnet sein, die über einen Dichtring 76 gegenüber dem Ventilgehäuse 12 abgedichtet ist. Die Drossel 60 kann als einfaches zylinderringförmiges Bauteil mit einer radialen Aussparung an der Außenseite für den Dichtring 76 ausgeführt sein und letztlich über die Anordnung des zweiten Ventilsitzes 24 an der Drossel 60 den freigebbaren Strömungsquerschnitt in der ersten Schaltposition mitbestimmen. Die Drossel 60 ist gegenüber dem Ventilgehäuse 12 festgelegt.

An dem dem Kopfteil 50 gegenüberliegenden Ende des Schaltelementes 16 ist ein Fußteil 52 angeordnet. Das Fußteil 52 ist in der axialen Richtung 14 beweglich in einem Schlitten 30 gelagert, so dass das Schaltelement 16 in der axialen Richtung 14 gegenüber dem Schlitten 30 bewegbar ist. Das Schaltelement 16 erstreckt sich daher in der axialen Richtung 14 durch die Drossel 60 und kann ausschließlich über das Fußteil 52 gelagert sein. Der Schlitten 30 kann einen Anschlag 44 und einen weiteren Anschlag 46 aufweisen, zwischen denen das Fußteil 52 des bewegbaren Schaltelementes 16 hin- und herbewegbar ist. Der Anschlag 44 und der weitere Anschlag 46 begrenzen daher die relative Bewegbarkeit des Schaltelementes 16 zu dem Schlitten 30 in der axialen Richtung 14. Das Innere des Schlittens 30 kann durch das Fußteil 52 in einen Federkäfig 32 und einen weiteren Federkäfig 38 unterteilt sein. In dem Federkäfig 32 kann eine Feder 34 angeordnet sein, die eine Kraft in der axialen Richtung 14 auf das Fußteil 52 des Schaltelementes 16 ausübt. Weiterhin kann in dem weiteren Federkäfig 38 eine weitere Feder 40 angeordnet sein, die eine weitere Kraft auf das Fußteil 52 des Schaltelementes 16 ausübt, wobei die durch die weitere Feder 40 ausgeübte weitere Kraft der durch die Feder 34 ausgeübten Kraft entgegengesetzt wirken kann. Je nach Bedarf können durch die Feder 34 und die weitere Feder 40 Zug- oder Druckkräfte auf das Fußteil 52 in der axialen Richtung 14 ausgeübt werden. Die Feder 34 und die weitere Feder 40 sind optional und können je nach Bedarf entfallen. Der Schlitten 30 ist in der axialen Richtung 14 in dem Gehäuse 12 bewegbar.Die Bewegung des Schlittens 30 kann dabei über den Trieb 20 und einen Stab 68 mit dem Elektromotor 18 gekoppelt sein. Der Stab 68 kann beispielsweise über ein Gewinde 72 mit einem Verbindungsstück 70 gekoppelt sein, welches wiederum fest mit dem Schlitten 30 gekoppelt sein kann.

Durch eine Ansteuerung des Elektromotors 18 über den elektrischen Anschluss 74 wird der Schlitten 30, der über den Stab 68, das Gewinde 72 und das Verbindungsstück 70 mit dem Trieb 20 gekoppelt ist, in der axialen Richtung 14 innerhalb des Ventilgehäuses 12 verschoben. Eine Verschiebung des Schlittens 30 in dem Ventilgehäuse 12 verursacht eine relative Positionsänderung des Fußteils 52 des bewegbaren Schaltelementes 16 relativ zu dem Schlitten 30, so dass die in dem Federkäfig 32 angeordnete Feder 34 und die in dem weiteren Federkäfig 38 angeordnete weitere Feder 40 zusammengedrückt oder auseinandergezogen werden. Auf diese Weise können die von der Feder 34 ausgeübte Kraft und die von der weiteren Feder 40 ausgeübte weitere Kraft verändert werden. Zum Schalten des Ventils 10 kann der Elektromotor 18 beispielsweise für eine bestimmte Zeitspanne, eine Schaltphase, bestromt werden, so dass der Trieb 20 den Stab 68 um einen vorbestimmten Weg in der axialen Richtung 14 bewegt. Die Bewegung des Stabes 68 erfolgt immer relativ zu der aktuellen Position des Stabes 68, so dass eine Veränderung der axialen Position des Stabes 68 am Beginn der Schaltphase eine veränderte Endposition des Stabes 68 am Ende der Schaltphase verursachen kann. Das Schalten des Ventils 10 erfolgt somit nicht durch das Anfahren einer vorbestimmten Position in der axialen Richtung 14, sondern durch das Überfahren von Schwellen, weshalb auch bei einem vorübergehenden Strom- oder Spannungsausfall die Funktion des Ventils 10 ohne vorhergehende Kalibrierung gewährleistet ist. Die Veränderung der Anfangs- und der Endposition kann im Extremfall dazu führen, dass das Schalten des Ventils 10 nicht zu der beabsichtigten Änderung der Schaltposition des Schaltelementes 16 führt. Um dies zu verhindern, kann eine regelmäßige Kalibrierung vorgesehen sein. Die Veränderung von Anfangs- und Endposition kann allgemein als Positionsverlust bezeichnet werden. Um die Schaltzeit des Ventils 10 zu verkürzen, kann vorgesehen sein, dass der Trieb 20 als nichtlinearer Spindeltrieb ausgeführt ist, wobei der Spindeltrieb zwei Bereiche mit einer ersten Ganghöhe umfasst, zwischen denen ein weiterer Bereich mit einer zweiten Ganghöhe angeordnet ist, die größer als die erste Ganghöhe ist. Die Bereiche des Spindeltriebs, die die erste Ganghöhe umfassen, werden genutzt, wenn das Ventil 10 sich in der ersten Schaltposition 24 oder in der zweiten Schaltposition 26 befindet. Der dazwischen liegende Bereich mit der zweiten Ganghöhe wird während einer Schaltphase des Ventils genutzt, bei dem das Ventil 10 zwischen der ersten Schaltposition 24 und der zweiten Schaltposition 26 umgeschaltet wird. Unter der Benutzung eines Bereichs des Spindeltriebs wird in der vorliegenden Beschreibung verstanden, dass in den Spindeltrieb eingreifende Verbindungsglieder, beispielsweise eine Spindelmutter, in dem benutzten Bereich die Kopplung zwischen dem Spindeltrieb und dem Elektromotor 18 herstellen.

Der erste Anschluss 62 des Ventils 10 kann beispielsweise mit einer Druckluftversorgungsleitung gekoppelt sein. Der zweite Anschluss 64 kann beispielsweise mit einem Federspeicherbremszylinder oder mit einem Steuereingang eines einen Federspeicherbremszylinder belüftenden Relaisventils gekoppelt sein. Der dritte Anschluss 66 kann beispielsweise mit einer Entlüftung gekoppelt sein. Das in der Figur 1 dargestellte Ventil 10 kann beispielsweise als zentrales schaltendes 3/2-Wegeventil in einer Feststellbremseinrichtung einer Feststellbremse eines Fahrzeugs, insbesondere eines Nutzfahrzeugs, vorgesehen sein.

Figur 1 stellt das Ventil 10 in seiner ersten Schaltposition 26 dar, bei der der zweite Anschluss 64 mit dem dritten Anschluss 66 gekoppelt ist. Die erste Schaltposition 26 des Ventils 10 kann, beispielsweise wenn das Ventil 10 wie oben beschrieben als zentrales Schaltelement einer Feststellbremseinrichtung vorgesehen ist, einer Parkstellung entsprechen, bei der der zweite Anschluss 64 über den dritten Anschluss 66 entlüftet ist. Auf diese Weise können Federspeicherbremszylinder entlüftet werden, die über den zweiten Anschluss 64 belüftet werden oder die aufgrund eines Drucksteuersignals des zweiten Anschlusses 64 belüftet werden, so dass die Federspeicherbremszylinder drucklos sind und die Feststellbremse entsprechend geschlossen ist, das heißt eine Bremswirkung verursacht. Die vorliegende Beschreibung verwendet das Entlüften und das Belüften eines Federspeicherbremszylinders immer im Zusammenhang mit einem Federspeicherteil des Federspeicherbremszylinders. Wenn das Federspeicherteil belüftet ist, ist eine in dem Federspeicherteil angeordnete Feder komprimiert, so dass der Federspeicherbremszylinder über das Federspeicherteil keine Bremskraft bewirkt. Neben dem Federspeicherteil umfasst der Federspeicherbremszylinder üblicherweise auch einen Betriebsbremsteil, der unabhängig von dem Federspeicherteil durch die Betriebsbremse belüftet werden kann.

Das Kopfteil 56 des Schaltelementes 16 wird in dem dargestellten Schaltzustand des Ventils 10 aufgrund der durch die Feder 34 auf das Fußteil 52 des Schaltelementes 16 ausgeübten Kraft in der axialen Richtung 14 gegen den ersten Ventilsitz 22 gedrückt, so dass ein eventuell an dem ersten Anschluss 62 anstehender Versorgungsdruck abgesperrt ist. Die von der Feder 34 ausgeübte Kraft kann dementsprechend größer als die von der weiteren Feder 40 ausgeübte weitere Kraft sein. Alternativ kann die weitere Feder auch eine Zugkraft auf das Fußteil 52 bewirken und die von der Feder 34 ausgeübte Kraft unterstützen. Weiterhin ist es möglich, dass die weitere Feder 40 entfällt.

Aus Figur 1 ist weiterhin erkennbar, dass das Fußteil 52 des Schaltelementes 16 weder an dem Anschlag 44 noch an dem weiteren Anschlag 46 anliegt, so dass beispielsweise ein unzulässig hoher Druckanstieg an dem ersten Anschluss 62 zu einem kurzfristigen Abheben des Kopfteiles 50 von dem ersten Ventilsitz 22 führen kann. Ein Druckanstieg an dem zweiten Anschluss 64 kann aufgrund des großen Ventilquerschnittes des Ventils 10 direkt über den dritten Anschluss 66 abgeleitet werden. Ein kurzzeitiges Abheben des Kopfteils 50 von dem ersten Ventilsitz 22 ist beispielsweise auch aufgrund von Vibrationen denkbar. Derartige Vibrationen können beispielsweise während Wartungsarbeiten an einem stehenden Fahrzeug vorkommen und durch hämmernde Schläge verursacht werden. Entsprechende Vibrationen können auch beim Transport des gesamten Fahrzeugs im Zug- und Schiffsverkehr auftreten. Denkbar ist auch, dass die auftretenden Vibrationen ausreichend stark sind, die Selbsthemmung des Triebs 20 zu überwinden, so dass die Positionierung des Schlittens 30 innerhalb des Ventilgehäuses 12 langsam verändert wird. Dies kann zu einer Veränderung der relativen Position des Fußteiles 52 innerhalb des Schlittens 30 führen, so dass die an dem Kopfteil 50 wirksame Anpresskraft verändert wird, die über die von der Feder 34 verursachte Kraft und die von der weiteren Feder 40 verursachte weitere Kraft bestimmt werden kann. Dies kann auch einen Positionsverlust des Ventils 10 verursachen, das aus diesem Grunde regelmäßig kalibriert werden sollte. Da die Positionsveränderung des Schlittens 30 bei dem Positionsverlust nur langsam erfolgen kann, wird sich auch die das Kopfteil 50 an den ersten Ventilsitz 22 anpressende Kraft nur langsam ändern. Ein eventuell an dem ersten Anschluss 62 anliegender Versorgungsdruck, das heißt ein aufgrund des Versorgungsdruckes überströmendes Luftvolumen, wird daher problemlos über den großen Ventilquerschnitt des Ventils 10 zu dem geöffneten dritten Anschluss 66 abgeführt, der mit einer in der Figur nicht dargestellten Entlüftung gekoppelt sein kann. Die Parkstellung der Feststellbremse ist somit nicht gefährdet, so dass die in der Figur 1 dargestellte erste Schaltstellung 26 des Ventils 10 als stabil anzusehen ist.

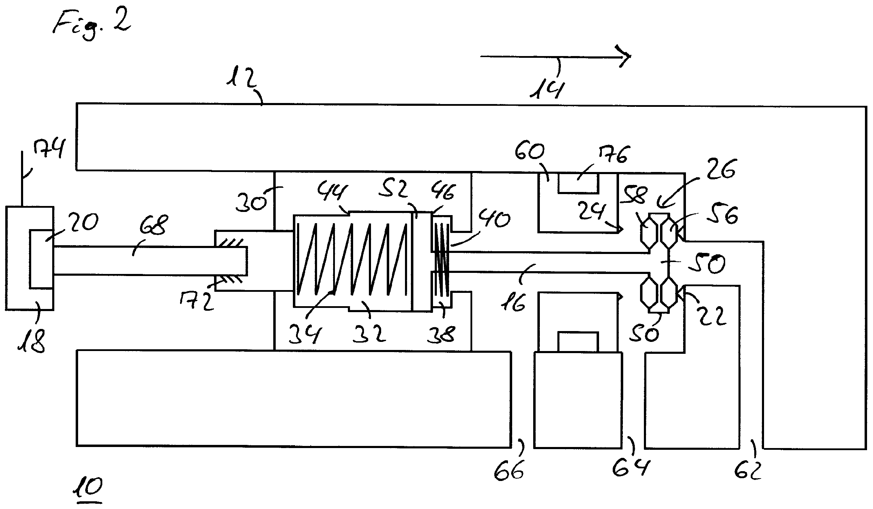

Figur 2 zeigt ein elektrisch ansteuerbares bistabiles Ventil in einem zweiten Schaltzustand. Im Gegensatz zu dem bereits aus der Figur 1 bekannten Ventil 10 ist bei dem in der Figur 2 dargestellten Ventil 10 der Schlitten 30 in dem Ventilgehäuse 12 in der axialen Richtung 14 derart positioniert, dass das Fußteil 52 an dem weiteren Anschlag 46 anliegt, so dass eine weitere Bewegung des Schlittens 30 über den von dem Elektromotor 18 angetriebenen Trieb 20 mit der vollen Kraft des Elektromotors 18 erfolgen kann. Dies erlaubt ein sicheres Losreißen der an dem Kopfteil 50 angeordneten Dichtung 56 von dem ersten Ventilsitz 22. Dieses Losreißen der Dichtung 56 von dem ersten Ventilsitz 22 kann eventuell notwendig sein, falls ein an dem ersten Anschluss 62 anstehender Versorgungsdruck nicht ausreicht, das bewegbare Schaltelement in der axialen Richtung 14 von dem ersten Ventilsitz 22 abzuheben. Das Losreißen zur Unterstützung des an dem ersten Anschluss 62 anstehenden Versorgungsdruckes kann beispielsweise nicht sinnvoll sein, wenn die Betriebsbremse noch keinen ausreichenden Betriebsbremsdruck aufweist. Ein nicht ausreichender Betriebsbremsdruck kann sich beispielsweise in einem geringen Versorgungsdruck an dem ersten Anschluss 62 des Ventils 10 zeigen. Es ist allerdings denkbar, dass zu Wartungszwecken ein Losreißen möglich ist, wenn kein oder nur ein geringer Druck am ersten Anschluss 62 ansteht. Das Druckniveau an dem ersten Anschluss 62 kann beispielsweise über einen in der Figur nicht dargestellten Drucksensor erfolgen. Dies kann beispielsweise notwendig werden, wenn die weitere Feder 40 entfällt oder die von der weiteren Feder 40 verursachte weitere Kraft sehr gering ist. Auch zwischen dem ersten Ventilsitz 22 und der Dichtung 56 auftretende Klebekräfte können ein Losreißen erforderlich machen. In der in Figur 2 dargestellten Position des Schlittens 30 relativ zu dem Schaltelement 16 kann die von der Feder 34 verursachte Kraft auf das Fußteil 52 des Schaltelementes 16 sehr klein werden oder verschwinden. Die in der Figur 2 dargestellte erste Schaltposition 26 des Schaltelementes 16 in Verbindung mit der relativen Positionierung des Schlittens 30 zu dem Schaltelement 16 kann insbesondere kurz vor dem Wechsel aus der ersten Schaltposition 26 in eine in Figur 2 nicht dargestellte zweite Schaltposition 28 auftreten.

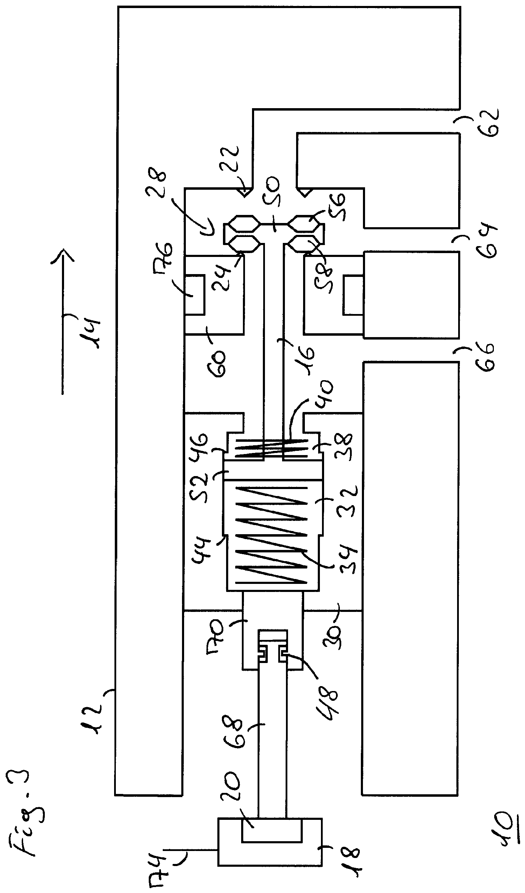

Figur 3 zeigt ein elektrisch ansteuerbares bistabiles Ventil in einem dritten Schaltzustand. Dargestellt ist das Ventil 10, welches bereits aus den Figuren 1 und 2 bekannt ist, in einer zweiten Schaltposition 28 des bewegbaren Schaltelementes 16, bei dem das Kopfteil 50 des Schaltelementes 16 dicht an dem zweiten Ventilsitz 24 anliegt. Zu diesem Zweck ist die weitere Dichtung 58 an dem Kopfteil 50 vorgesehen, die aufgrund der in dem Ventil 10 auftretenden Kräfte in der axialen Richtung 14 gegen den zweiten Ventilsitz 24 gepresst wird. Im Gegensatz zu den aus den Figuren 1 und 2 bekannten Ausführungsformen des Ventils ist an Stelle des Gewindes 72 zwischen dem Stab 68 und dem Verbindungsstück 70 ein Spiel 48 vorgesehen, welches beispielsweise einer Ausnehmung an dem Stab 68 und eine umlaufende oder teilweise umlaufende Nase an dem Verbindungsstück 70 umfasst, welche in die zugehörige Ausnehmung an dem Stab 68 zumindest teilweise eingreift. Aufgrund des Spiels 48 kann der Stab 68 relativ zu dem Verbindungsstück 70 in der axialen Richtung 14 durch den Trieb 20 geringfügig verschoben werden, ohne dass der Schlitten 30 seine relative Position zu dem Ventilgehäuse 12 und/oder dem Schaltelement 16 ändert. Eine Bewegung innerhalb des Spiels 48 verändert somit nicht die an dem Schaltelement 16 angreifenden Kräfte in der axialen Richtung 14. Alternativ kann das Spiel 48 auch zwischen dem Trieb 20 und dem Stab 68 vorgesehen sein.

Auf diese Weise kann der Elektromotor 18 und der Trieb 20 mit dem Stab 68 von dem Rest des Ventils 10 entkoppelt werden, so dass Vibrationen, wie sie beispielsweise während einer Fahrt auftreten, nicht zu unerwünschten Kraftspitzen an dem Trieb 20 oder dem Elektromotor 18 führen, welche eine Beschädigung des Elektromotors 18 oder des Triebes 20 verursachen könnten. Die in der Figur 3 dargestellte zweite Schaltposition 28 des Kopfteiles 50 des Schaltelementes 16 kann einer gelösten Feststellbremse entsprechen, da ein an dem ersten Anschluss 62 anstehender Versorgungsdruck auch an dem zweiten Anschluss 64 bereitgestellt wird, welcher direkt oder indirekt zu einer Belüftung angeschlossener Federspeicherbremszylinder beitragen kann und somit zum Lösen der Feststellbremse führen kann. Aufgrund des an dem ersten Anschluss 62 anstehenden Versorgungsdruckes wird das Kopfteil 50 des Schaltelementes 16 gegen den zweiten Ventilsitz 24 gepresst, so dass weitere auf das Fußteil 52 des Schaltelementes 16 in der axialen Richtung 14 wirkende Kräfte zur Stabilisierung der in der Figur 3 dargestellten zweiten Schaltposition 28 nicht notwendig sind. Trotzdem können die von der Feder 34 verursachte Kraft und die von der weiteren Feder 40 verursachte weitere Kraft in der axialen Richtung 14 zusätzlich über das Fußteil 52 auf das Schaltelement 16 einwirken, wobei sich nach Möglichkeit ein Kräftegleichgewicht durch eine Verschiebung des Schlittens 30 in der axialen Richtung 14 einstellen wird, bei dem sich die von der Feder 34 verursachte Kraft und die von der weiteren Feder 40 verursachte weitere Kraft gerade gegenseitig aufheben. Dies ist insbesondere aufgrund des in der Figur 3 dargestellten Spiels 48 in einfacher Weise möglich. Die während einer Fahrt auftretenden Vibrationen können ebenfalls zu einer Verschiebung des Schlittens 30 in die "kraftfreie" axiale Position führen, wenn sie ausreichend groß sind, um die Selbsthemmung des Triebes 20 zu überwinden. Der dann einsetzende Positionsverlust des Ventils 10 erfolgt in Richtung der "kraftfreien" axialen Position des Schlittens 30. Der Positionsverlust zeigt wieder die Notwendigkeit einer regelmäßigen Kalibrierung der axialen Position des Ventils 10. Die Bistabilität des Ventils 10 bleibt unabhängig von dem an dem ersten Anschluss 62 bereitgestellten Versorgungsdruck erhalten, wenn die auf das Schaltelement 16 wirkenden anderen Kräfte ausreichend bemessen sind. Eine druckabhängige Instabilität der zweiten Schaltposition 28 kann somit vermieden werden.

Denkbar ist in diesem Zusammenhang daher insbesondere, dass die von dem Elektromotor 18 angestrebte Positionierung des Schlittens 30 bei der in der Figur 3 dargestellten zweiten Schaltposition 28 gerade einer kräftefreien Position des Schlittens 30 in dem Ventilgehäuse 12 entspricht. Während der Fahrt auftretende Vibrationen können in diesem Fall zu einer kurzzeitigen Auslenkung des Schlittens 30 in der axialen Richtung 14 führen. Aufgrund der vorhandenen Kräfte, die über das Fußteil 52 und die Feder 34 sowie die weitere Feder 40 auf den Schlitten 30 wirken, wird der Schlitten 30 allerdings wieder zu der als stabil anzusehenden Ausgangsposition zurückkehren. Falls die Vibrationen Kräfte erzeugen, die so groß sind, dass die Selbsthemmung des Triebes 20 überwunden wird, wird im zeitlichen Mittel keine den Schlitten 30 in der axialen Richtung 14 bewegende Kraft erzeugt. Der Schlitten 30 wird vielmehr in der dargestellten kräftefreien Position gehalten, da eine anfängliche Auslenkung zu einer im Folgenden rückstellenden Kraft führt. Dies ist insbesondere relevant, wenn an Stelle des Spiels 48 die Kopplung zwischen dem Stab 68 und dem Verbindungsstück 70 über das Gewinde 72 erfolgt, wie es beispielsweise in den Figuren 1 und 2 dargestellt ist. Der Positionsverlust des Elektromotors 18 durch die Vibrationen wird auf diese Weise beschränkt.

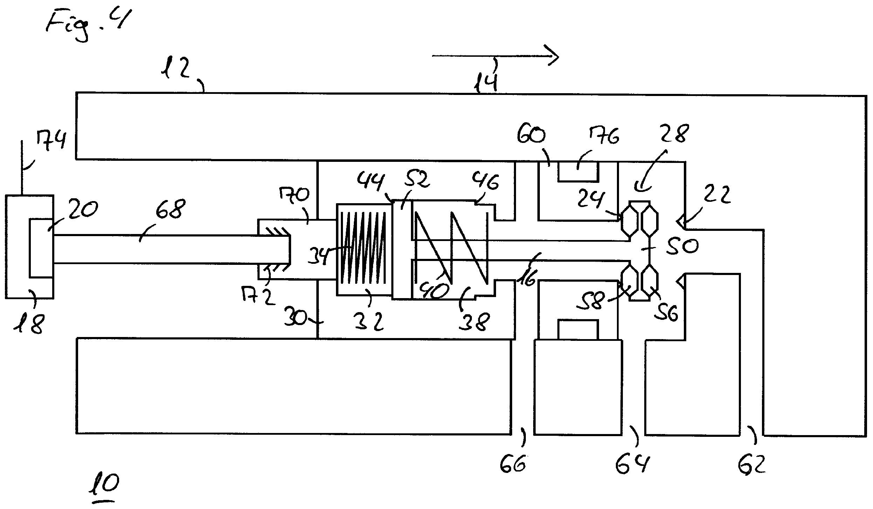

Figur 4 zeigt ein elektrisch ansteuerbares bistabiles Ventil in einem vierten Schaltzustand. Im Gegensatz zu dem aus Figur 3 dargestellten Ventil 10 ist bei dem in der Figur 4 dargestellten Ventil 10 wieder das Gewinde 72 zwischen dem Stab 68 und dem Verbindungsstück 70 vorgesehen, wobei andeutungsweise die Gewindeorientierung gedreht wurde. Weiterhin ist der Schlitten 30 durch den Elektromotor 18 und den Trieb 20 in der axialen Richtung 14 soweit bewegt, dass das Fußteil 52 des Schaltelementes 16 an dem Anschlag 44 anliegt. Eine weitere Verschiebung des Schlittens 30 in der axialen Richtung 14 erfolgt dann mit der gesamten durch den Elektromotor 18 aufbringbaren Kraft, so dass das Kopfteil 50 des Schaltelementes 16 von dem zweiten Ventilsitz 24 sicher losgerissen werden kann. Dieser Schaltzustand kann kurz vor dem Schließen der Feststellbremse auftreten, das heißt kurz vor dem Entlüften des zweiten Anschlusses 64 über den dritten Anschluss 66, wenn die durch die Feder 34 auf das Schaltelement 16 ausgeübte Kraft und/oder die von der weiteren Feder 40 auf das Schaltelement 16 ausgeübte weitere Kraft nicht ausreichen, um die weitere Dichtung 58 von dem zweiten Ventilsitz 24 loszureißen. Das kann beispielsweise aufgrund von Klebekräften zwischen dem zweiten Ventilsitz 24 und der weiteren Dichtung 58 der Fall sein.

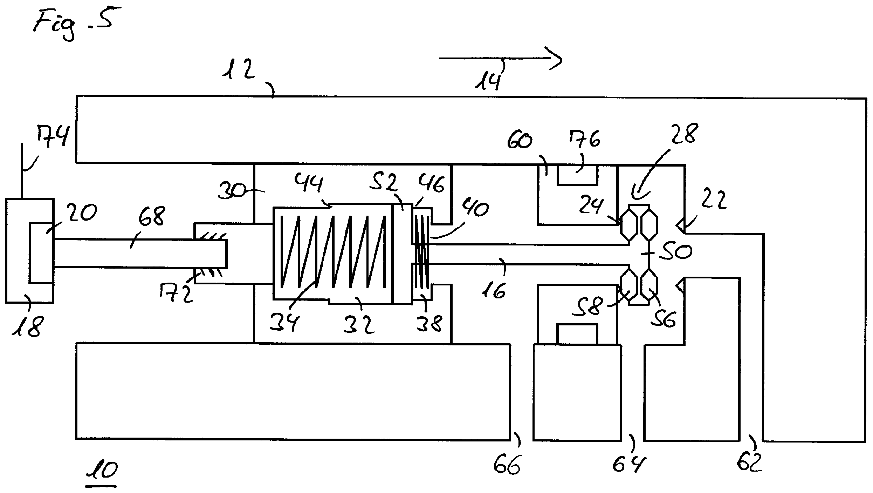

Figur 5 zeigt ein elektrisch ansteuerbares bistabiles Ventil in einem fünften Schaltzustand. Im Gegensatz zu den aus den Figuren 3 und 4 bekannten Schaltzuständen des Ventils 10 ist der Schlitten 30 in der Figur 5 in der axialen Richtung 14 gegenüber dem Schaltelement 16 soweit verschoben, dass das Fußteil 52 an dem weiteren Anschlag 46 anliegt. Der Versuch einer weiteren Verschiebung des Schlittens 30 in der axialen Richtung 14 mit Hilfe des Elektromotors 18 führt dann zu einem sprunghaften Anstieg der Anpresskraft der weiteren Dichtung 58 an dem zweiten Ventilsitz 24, die auch mit Hilfe der vollständigen von dem Elektromotor 18 aufbringbaren Kraft nicht überwunden werden kann. Dies kann zur Kalibrierung des Ventils 10 genutzt werden, das heißt zu einer Bestimmung der Positionen der bewegbaren Komponenten des Ventils 10 in der axialen Richtung 14. Eine entsprechende Kalibrierung kann beispielsweise in periodischen Zeitabständen beziehungsweise regelmäßig beim Schalten von der ersten Schaltposition 26 des Schaltelementes 16 in die zweite Schaltposition 28 kurzfristig erfolgen.

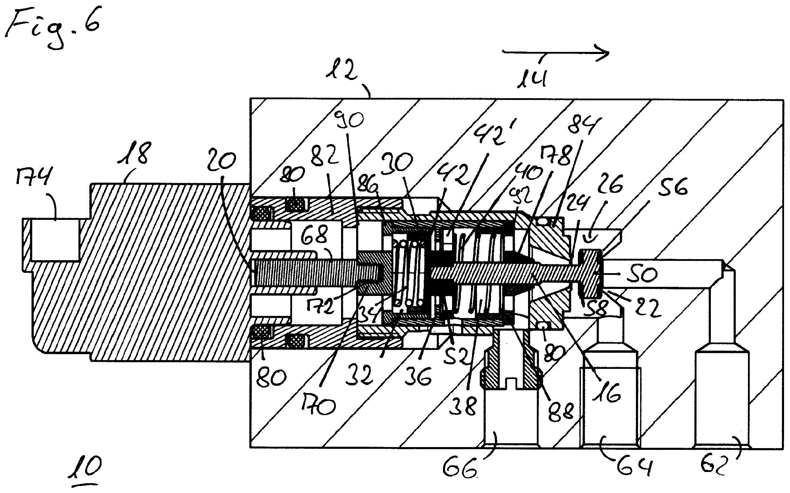

Figur 6 zeigt ein weiteres elektrisch ansteuerbares bistabiles Ventil in einem ersten Schaltzustand. Das in der Figur 6 dargestellte Ventil 10 verfügt gegenüber den aus den Figuren 1 bis 5 bekannten Ausführungsformen über zusätzliche Besonderheiten. Im Inneren des Ventilgehäuses 12 sind beispielsweise ein Ventileinschub 82 und ein weiterer Ventileinschub 84 vorgesehen, die über Gehäusedichtungen 80 gegenüber dem Ventilgehäuse 12 abgedichtet sind. Der Ventileinschub 82 und der weitere Ventileinschub 84 sind gegenüber dem Ventilgehäuse 12 des Ventils 10 festgelegt. Der Ventileinschub 82 kann eine Schlittensperre 90 bereitstellen, die beispielsweise in Form eines Vorsprungs die Bewegung des Schlittens 30 in der axialen Richtung 14 begrenzen kann. Ebenso kann der weitere Ventileinschub 84 eine weitere Schlittensperre 92 bereitstellen, welche ebenfalls die Bewegung des Schlittens 30 in der axialen Richtung 14 beschränken kann, so dass der Schlitten 30 in der axialen Richtung 14 nur zwischen der Schlittensperre 90 und der weiteren Schlittensperre 92 hin- und herbewegbar ist. Weiterhin kann eine Führung 78 als Bestandteil des Schlittens 30 vorgesehen sein, welche zusätzlich oder alternativ zu dem Fußteil 52 des Schaltelementes 16 die Führung des Schaltelementes 16 in der axialen Richtung 14 gewährleistet. Der Federkäfig 32 kann bei dem in Figur 6 dargestellten Ventil 10 durch einen Federkäfigboden 86 und einen Federkäfigdeckel 42 begrenzt sein, zwischen denen die Feder 34 eingespannt sein kann. In gleicher Weise kann der weitere Federkäfig 38 durch einen weiteren Federkäfigboden 88 und einen weiteren Federkäfigdeckel 42' begrenzt sein, zwischen denen die weitere Feder 40 eingespannt sein kann. Das Fußteil 52 des Schaltelementes 16 kann sich auf dem Federkäfigdeckel 42 des Federkäfigs 32 und/oder dem weiteren Federkäfigdeckel 42' des weiteren Federkäfigs 38 abstützen oder auf diesem aufliegen, so dass die von der Feder 34 verursachte Kraft und die von der weiteren Feder 40 verursachte weitere Kraft in der axialen Richtung 14 auf das Schaltelement 16 übertragbar ist. Die Bewegung des Federkäfigdeckels 42 und/oder des weiteren Federkäfigdeckels 42' kann durch ein Sperrelement 36 im Inneren des Schlittens 30 begrenzt sein. Auf diese Weise kann es beispielsweise möglich sein, das Fußteil 52 des Schaltelementes 16 unter einer Vorspannung auf der Höhe des Sperrelementes 36 in dem Schlitten 30 in der axialen Richtung 14 flexibel zu fixieren. Neben dem Sperrelement 36 kann ein nicht dargestelltes weiteres Sperrelement vorgesehen sein. Das weitere Sperrelement kann in der axialen Richtung 14 von dem Sperrelement 36 beabstandet gegenüber dem Schlitten festgelegt sein, um unabhängig voneinander die maximale Ausdehnung des Federkäfigs 32 und des weiteren Federkäfigs 38 festlegen zu können. Der Federkäfigdeckel 42 kann sich dann bis zu dem Sperrelement 36 bewegen, während sich der weitere Federkäfigdeckel 42' in der axialen Richtung 14 bis zu dem weiteren Sperrelement bewegen kann. Das Sperrelement 36 und das weitere Sperrelement können zusammenfallen.

Der Elektromotor 18 ist durch ein ihn einhüllendes Gehäuse symbolisiert, welches über die Gehäusedichtung 80 mit dem Ventileinschub 82 gekoppelt ist. Eine direkte Kopplung des Elektromotors mit dem Ventilgehäuse 12 ist alternativ ebenfalls möglich. Analog zu der aus Figur 3 bekannten Kopplung des Verbindungsstückes 70 mit dem Stab 68 über das Spiel 48 ist auch bei diesem Ventil 10 eine entsprechende Ausführungsform mit einem Spiel 48 möglich.

Der in Figur 6 dargestellte Schaltzustand des Ventils 10 entspricht im Wesentlichen dem aus der Figur 1 bekannten Schaltzustand. Das Schaltelement 16 ist in seiner ersten Schaltposition 26, wobei das Kopfteil 50 den ersten Anschluss 62, der beispielsweise mit einer Druckluftversorgung gekoppelt sein kann, gegenüber dem zweiten Anschluss 64 und dem dritten Anschluss 66 absperrt. Gleichzeitig ist zwischen dem zweiten Anschluss 64 und dem dritten Anschluss 66 der Druckluftpfad freigegeben, so dass über eine an dem dritten Anschluss 66 vorgesehene Entlüftung auch der zweite Anschluss 64 entlüftet werden kann. Der Schlitten 30 ist im dargestellten Schaltzustand relativ zu dem Ventilgehäuse 12 in der axialen Richtung 14 bis zu der weiteren Schlittensperre 92 bewegt, so dass eine weitere Bewegung des Schlittens 30 in dieser Richtung verhindert wird. Dies kann zur Kalibrierung des Ventils 10 genutzt werden. Weiterhin kann auf diese Weise die auf die Dichtung 56 wirkende Anpresskraft an dem ersten Ventilsitz 22 begrenzt werden, da diese ausschließlich durch die von der Feder 34 aufgebrachte Kraft und die von der weiteren Feder 40 aufgebrachte weitere Kraft bestimmt ist. Ein eventuell am ersten Anschluss 62 anstehender Versorgungsdruck ist jedoch zu berücksichtigen. Die Feder 34 oder die weitere Feder 40 können je nach Bedarf entfallen, wobei nur eine ausreichend große Kraft in der axialen Richtung 14 zum Anpressen des Kopfteiles 50 an den ersten Ventilsitz 22 notwendig ist, um das dichte Anliegen auch bei Anstehen eines "normalen" Versorgungsdruckes an den ersten Anschluss 62 zu gewährleisten. Eine durch Vibration verursachte Undichtigkeit an dem ersten Ventilsitz 22 durch ein kurzzeitiges Abheben des Kopfteiles 50 von dem ersten Ventilsitz 22 führt analog zu der aus der Figur 1 bekannten Ausführungsform des Ventils 10 nicht zu einem Verlassen der ersten Schaltposition 26 des Schaltelementes 16, da entweichende Druckluft sicher durch den großen freigegebenen Ventilquerschnitt des Ventils 10 über den dritten Anschluss 66 zu einer Entlüftung abgeleitet werden kann. Die in der Figur 6 dargestellte erste Schaltposition 26 entspricht analog zu der aus Figur 1 bekannten Ausführungsform des Ventils 10 einer Parkstellung einer Feststellbremseinrichtung, beispielsweise wenn das in der Figur 6 dargestellte Ventil als zentrales Schaltventil einer Feststellbremseinrichtung vorgesehen ist.

Die durch die Bewegung des Schlittens 30 in dem Ventilgehäuse verursachten Volumenveränderungen führen nicht zu partiellen Druckerhöhungen, welche zusätzliche Kräfte verursachen könnten, da diese permanent über die an dem dritten Anschluss 66 vorgesehene Entlüftung ausgeglichen werden können.

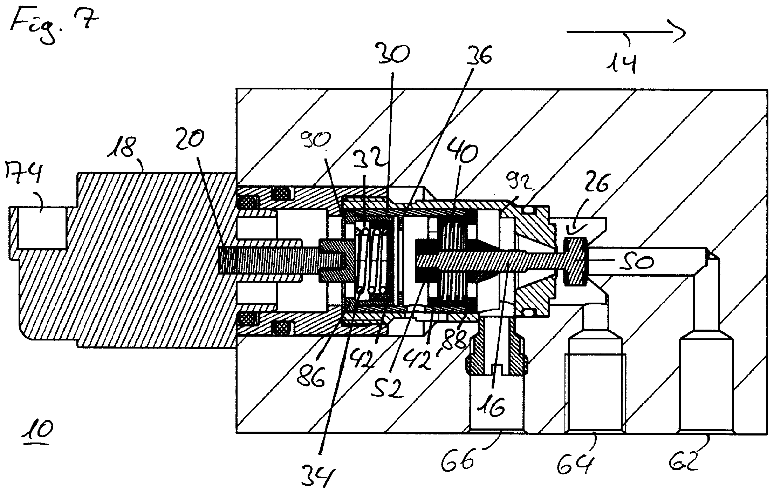

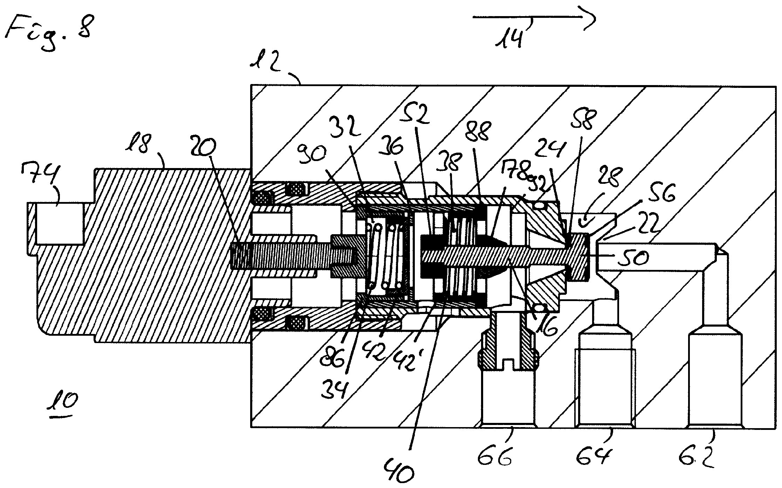

Figur 7 zeigt ein weiteres elektrisch ansteuerbares bistabiles Ventil in einem zweiten Schaltzustand. Im Gegensatz zu der aus Figur 6 bekannten Ausführungsform des Ventils ist bei dem in Figur 7 dargestellten Ventil 10 der Schlitten 30 in der axialen Richtung 14 von der weiteren Schlittensperre 92 in Richtung auf die Schlittensperre 90 fortbewegt. Der Schlitten 30 liegt jedoch noch nicht an der Schlittensperre 90 an, was insbesondere im Vergleich mit der folgenden Figur 8 ersichtlich ist. Aufgrund des Sperrelementes 36 in dem Schlitten 30 ist jedoch das Fußteil 52 des Schaltelementes 16 von dem Federkäfigdeckel 42 abgehoben, so dass auf das Schaltelement 16 lediglich die von der weiteren Feder 40 in der axialen Richtung 14 ausgeübte weitere Kraft wirkt. Dies kann zu einer Bewegung des Schaltelementes 16 von dem ersten Ventilsitz 22 zu dem zweiten Ventilsitz 24 führen, wodurch das Schaltelement 16 aus der ersten Schaltposition 26 in die zweite Schaltposition 28 überführt wird. Der in Figur 7 dargestellte Schaltzustand des Ventils 10 kann kurz vor dem Lösen der Feststellbremse, das heißt dem Belüften der Federspeicherbremszylinder, erfolgen. Da zum Belüften der Federspeicherbremszylinder, das heißt zum Lösen der Feststellbremse, ein ausreichender Versorgungsdruck notwendig ist, wird an dem ersten Anschluss 62 ein entsprechender Versorgungsdruck bereitstehen, welcher naturgemäß in der axialen Richtung 14 eine Kraft auf das Schaltelement 16 ausübt, die von dem ersten Ventilsitz 22 zu dem zweiten Ventilsitz 24 gerichtet ist. Aus diesem Grund kann auf die weitere Feder 40 verzichtet werden, da die von der weiteren Feder 40 ausgeübte weitere Kraft in der axialen Richtung 14 zur Bewegung des Schaltelementes 16 nicht unbedingt notwendig ist.

Figur 8 zeigt ein weiteres elektrisch ansteuerbares bistabiles Ventil in einem dritten Schaltzustand. Der in Figur 8 dargestellte Schaltzustand des Ventils 10 entspricht im Wesentlichen dem aus der Figur 3 bekannten Schaltzustand, das heißt einer belüfteten Feststellbremse. Im Gegensatz zu den in den Figuren 6 und 7 dargestellten Schaltzuständen ist in Figur 8 das Schaltelement 16 in seiner zweiten Schaltposition 28 dargestellt. Das Schaltelement 16 liegt in der zweiten Schaltposition 28 an dem zweiten Ventilsitz 24 dicht an, wobei zwischen dem Kopfteil 50 und dem zweiten Ventilsitz 24 die weitere Dichtung 58 vorgesehen ist, die in der axialen Richtung 14 zwischen dem zweiten Ventilsitz 24 und dem Kopfteil 50 des Schaltelemetes 16 zusammengedrückt wird. Im Gegensatz zu Figur 7 liegt der Schlitten 30 an der Schlittensperre 90 an, so dass der Elektromotor 18 den Schlitten 30 in dieser Richtung nicht weiter bewegen kann. Dies kann zur Kalibrierung des Ventils 10 genutzt werden. Die Kraft, die die weitere Dichtung 58 in der axialen Richtung 14 an den zweiten Ventilsitz 24 anpresst, ist analog zu Figur 6 unabhängig von einer eventuell über den Elektromotor 18 aufbringbaren Stellkraft. Lediglich der auf das Kopfteil 50 einwirkende Versorgungsdruck und die weitere Feder 40 erzeugen Kräfte, die das Schaltelement 16 in der dargestellten zweiten Schaltposition 28 festhalten und den dritten Anschluss 66 gegenüber dem zweiten Anschluss 64 und dem ersten Anschluss 62 abdichten. Die auf die weitere Dichtung 58 wirkende Kraft ist somit beschränkt. In dem dargestellten Schaltzustand ist das Fußteil 52 des Schaltelementes 16 von dem Federkäfigdeckel 42 abgehoben, so dass die Feder 34 keine Kraft in der axialen Richtung 14 auf das Schaltelement 16 ausübt.

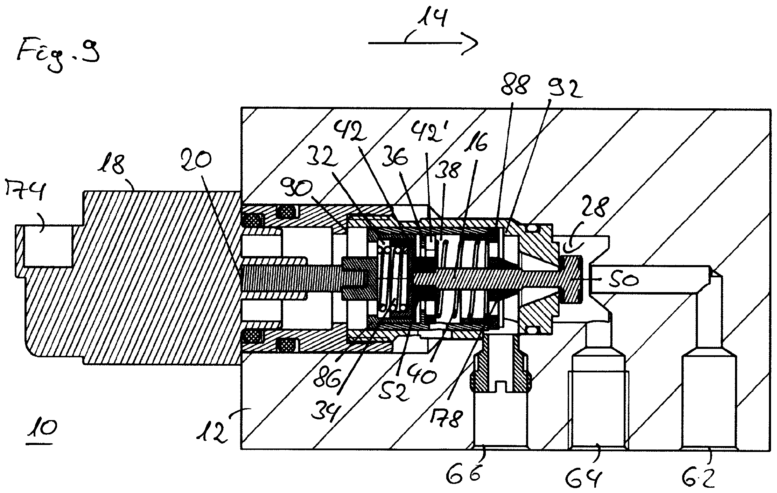

Figur 9 zeigt ein weiteres elektrisch ansteuerbares bistabiles Ventil in einem vierten Schaltzustand. Der in der Figur 9 dargestellte Schaltzustand des Ventils 10 entspricht im Wesentlichen dem aus der Figur 4 bereits bekannten Schaltzustand. Dargestellt ist ein Zeitpunkt direkt vor dem Übergang von der zweiten Schaltposition 28 zu der ersten Schaltposition 26 des Schaltelementes 16. Das dargestellte Ventil 10 wird dementsprechend die Feststellbremse durch das Belüften des zweiten Anschlusses 64 über den dritten Anschluss 66 einleiten, wobei gleichzeitig der erste Anschluss 62 abgetrennt wird, an dem ein Versorgungsdruck anliegt. Bei dem in Figur 9 dargestellten Schaltzustand ist der Schlitten 30 ausgehend von der Schlittensperre 90 in der axialen Richtung 14 bis kurz vor die weitere Schlittensperre 92 bewegt, wobei die weitere Schlittensperre 92 noch nicht erreicht ist. Dementsprechend wirkt auf das Schaltelement 16 neben der aus Figur 8 bereits bekannten weiteren Kraft durch die weitere Feder 40 und der durch den Versorgungsdruck verursachten Anpresskraft an dem Kopfteil 50 wieder die von der Feder 34 verursachte Kraft, die in dem dargestellten Schaltzustand die übrigen Kräfte betragsmäßig übertreffen kann. Alle Kräfte gemeinsam bewirken daher eine Änderung der Schaltposition des Schaltelementes 16. Dementsprechend wird die von der Feder 34 auf das Schaltelement 16 ausgeübte Kraft in der axialen Richtung 14 das Losreißen der weiteren Dichtung 58 an dem Kopfteil 50 von dem zweiten Ventilsitz 24 verursachen und das dargestellte Ventil 10 aus der zweiten Schaltposition 28 in die erste Schaltposition 26 überführen.

Das Verhalten des Ventils 10 unter Einfluss äußerer Vibrationen entspricht im Wesentlichen dem im Zusammenhang mit den Figuren 1 bis 5 beschriebenen Verhalten, so dass auf eine nochmalige Darstellung dieser die Stabilität des ersten Schaltzustandes 26 und des zweiten Schaltzustandes 28 begründenden Sachverhaltes an dieser Stelle verzichtet werden kann.

Durch das Vorsehen der Schlittensperre 90 und der weiteren Schlittensperre 92 kann bei jedem Schaltvorgang eine Kalibrierung der Position des Ventils 10 in der axialen Richtung 14 erfolgen. Bei der Kalibrierung der Position mit Hilfe der Schlittensperre 90 oder der weiteren Schlittensperre 92 bleibt die zwischen den Kopfteilen 50 und dem ersten Ventilsitz 22 oder die zwischen dem Kopfteil 50 und dem zweiten Ventilsitz 24 wirksame Anpresskraft beschränkt. Die Kalibrierung ist daher zeitlich unkritisch, da aufgrund der beschränkten Anpresskräfte keine erhöhten Klebekräfte zwischen dem ersten Ventilsitz 22 und der Dichtung 56 oder der weiteren Dichtung 58 und dem zweiten Ventilsitz 24 zu befürchten sind. Aufgrund der Führung 78 kann auf eine zusätzliche Lagerung des Fußteils 52 zur Führung des Schaltelementes 16 in der axialen Richtung 14 verzichtet werden. Die Führung 78 hat insbesondere hinsichtlich auftretender Querkräfte senkrecht zu der axialen Richtung 14 Vorteile, da die Führung 78 näher an dem Kopfteil 50 angeordnet sein kann. Insbesondere kann die Führung 78 im Wesentlichen mittig zwischen dem Kopfteil 50 und dem Fußteil 52 angeordnet sein, so dass mögliche, auf das Schaltelement 16 einwirkende Kräfte senkrecht zu der axialen Richtung 14 minimiert werden können.

Die in den Figuren 1 bis 9 dargestellten Ventile 10 können zur Umsetzung einer optimalen Motorschnittstelle, das heißt zur relativen Anpassung der Komponenten des Ventils 10, ein aufeinander abgestimmtes Verhältnis der Wege zueinander bieten. So können die Dichtung 56 und die weitere Dichtung 58, falls sie sich aufgrund von Klebeeffekten bei Kälte nicht vom dem ersten Ventilsitz 22 oder dem zweiten Ventilsitz 24 lösen, durch den jeweiligen Anschlag mit voller Motorkraft des Elektromotors 18 losgerissen werden. In diesem Zusammenhang wird darauf hingewiesen, dass aus der Praxis erhebliche Klebekräfte bekannt sind. Gleichzeitig kann die Dichtung aber nur mit einer begrenzten definierten Motorkraft des Elektromotors 18 angedrückt werden. Damit kann eine robuste Schaltfunktion in allen denkbaren Betriebszuständen durch den Elektromotor 18 gewährleistet werden. Da die Einschraubmomente des beispielsweise als Spindel ausgeführten Triebs 20 immer höher sind als in der entgegengesetzten Richtung notwendigen Lösemomente, kann der Elektromotor 18 immer von den harten Endanschlägen wieder weggefahren werden.

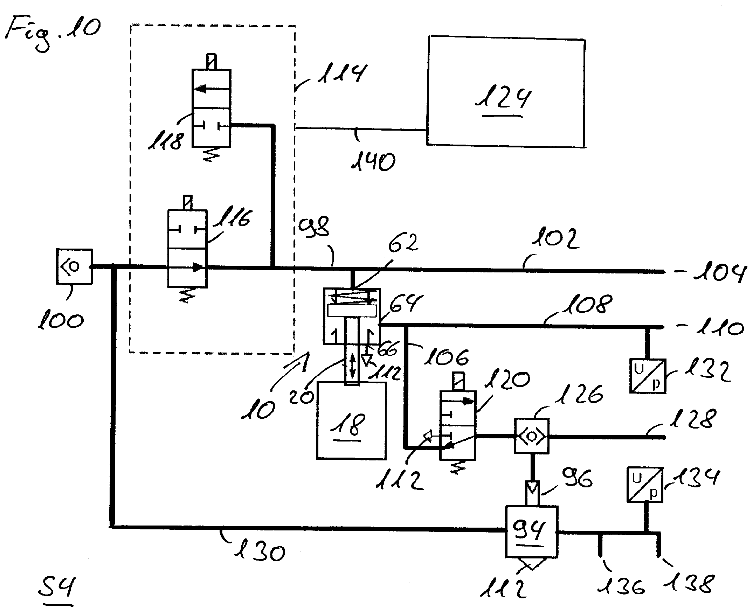

Figur 10 zeigt eine schematische Darstellung einer elektrisch betätigbaren Feststellbremseinrichtung in einem ersten Schaltzustand. Die dargestellte Feststellbremseinrichtung 54 umfasst einen Druckluftversorgungseingang 100, der über einen ersten Leitungsabschnitt 98 mit dem ersten Anschluss 62 des Ventils 10 gekoppelt ist. Der erste Anschluss 62 ist weiterhin direkt mit einem zweiten Leitungsabschnitt 102 gekoppelt, der in einem ersten Ausgangsanschluss 104 mündet. Der erste Ausgangsanschluss 104 ist dementsprechend ebenso wie der erste Anschluss 62 mit dem Druckluftversorgungseingang 100 gekoppelt.

Das Ventil 10 umfasst weiterhin einen zweiten Anschluss 64, der über einen dritten Leitungsabschnitt 106 mit einem Eingangsanschluss eines Select-High-Ventils 126 gekoppelt ist. Ein Ausgangsanschluss des Select-High-Ventils 126 kann mit einem pneumatischen Steuereingang 96 eines Relaisventils 94 gekoppelt sein, welches ausgangsseitig mit einem Federspeicherbremszylinderanschluss 136 und einem weiteren Federspeicherbremszylinderanschluss 138 verbunden sein kann. Das Relaisventil 96 kann weiterhin eingangsseitig mit einer Druckversorgungsleitung 130 gekoppelt sein, welche seinerseits mit dem Druckluftversorgungseingang 100 gekoppelt sein kann. Das Relaisventil 94 kann weiterhin eine Entlüftung 112 aufweisen. In dem dritten Leitungsabschnitt 106 kann eine Bremstestventileinrichtung 120 vorgesehen sein, welche beispielsweise als 3/2-Wegeventil mit eigener Entlüftung 112 ausgeführt sein kann. Die Bremstestventileinrichtung 120 kann von einem elektronischen Steuergerät 124 über eine nicht dargestellte elektrische Steuerleitung ansteuerbar sein und, falls kein Steuersignal anliegt, eine Verbindung zwischen dem zweiten Anschluss 64 und dem Select-High-Ventil 126 freigeben. Die Bremstestventileinrichtung 120 kann beispielsweise ein im Folgenden beschriebenes Select-Low-Ventil ersetzen, welches hinsichtlich seines zuverlässigen Schaltpunktes bei geringen Druckunterschieden an den beiden Eingangsanschlüssen problematisch sein kann. Ein weiterer Eingangsanschluss des Select-High-Ventils 126 kann mit einer pneumatischen Steuerleitung 128 gekoppelt sein, welche beispielsweise einen Steuerdruck aus einem Betriebsbremskreis eines Fahrzeugs bereitstellt, um bei einer Betätigung der Betriebsbremse automatisch die Feststellbremse zu lösen, damit eine Überbelastung von Federspeicherbremszylindern vermieden wird, die an dem Federspeicherbremszylinderanschluss 136 und dem weiteren Federspeicherbremszylinderanschluss 138 angeschlossen sein können.

Der zweite Anschluss 64 kann weiterhin mit einem vierten Leitungsabschnitt 108 gekoppelt sein, der in einem zweiten Ausgangsanschluss 110 mündet. Zur Bestimmung von in den einzelnen Bereichen der Feststellbremseinrichtung 54 anstehenden Drücken können je nach Bedarf ein erster Drucksensor 132 und ein zweiter Drucksensor 134 vorgesehen sein, wobei der erste Drucksensor 132 beispielsweise den an dem zweiten Ausgangsanschluss 110 bereitgestellten Druck erfasst, während der weitere Drucksensor 134 beispielsweise den an den beiden Federspeicherbremszylinderanschlüssen 136, 138 bereitgestellten Druck erfassen kann. Die gemessenen Druckniveaus können an das elektronische Steuergerät 124 übertragen werden. Zusätzliche nicht explizit dargestellte Drucksensoren an anderen Positionen der Feststellbremseinrichtung 54 können je nach Bedarf vorgesehen sein.

Das Ventil 10 kann weiterhin den dritten Anschluss 66 umfassen, der mit der Entlüftung 112 gekoppelt ist. Das Ventil 10 kann elektromotorisch von dem Elektromotor 18 betätigt werden, welcher über den selbsthemmenden Trieb 20 das eigentliche Ventil 10 schaltet. Das dargestellte Ventil 10 ist dementsprechend als elektrisch ansteuerbares bistabiles 3/2-Wegeventil ausgeführt. Der Elektromotor 18 kann über eine nicht dargestellte Steuerleitung durch das elektronische Steuergerät 124 angesteuert werden. Das dargestellte Ventil 10 kann einer der aus den Figuren 1 bis 9 bekannten Ausführungsformen entsprechen. Andere Ausführungsformen sind denkbar, wesentlich kann sein, dass das Ventil 10 ein bistabiles ansteuerbares 3/2-Wegeventil ist.

In dem ersten Leitungsabschnitt 98 kann eine Ventileinrichtung 114 angeordnet sein, die über die elektrische Steuerleitung 140 durch das elektronische Steuergerät 124 ansteuerbar ist. Die Ventileinrichtung 114 kann ein erstes 2/2-Wegeventil 116 und ein zweites 2/2-Wegeventil 118 umfassen, wobei das erste 2/2-Wegeventil 116 eine Unterbrechung des ersten Leitungsabschnittes 98 zwischen dem Druckluftversorgungseingang 100 und dem ersten Anschluss 62 sowie zwischen dem Druckluftversorgungseingang 100 und dem ersten Ausgangsanschluss erlaubt. Weiterhin kann das zweite 2/2-Wegeventil 118 eine teilweise Entlüftung des ersten Leitungsabschnittes 98 erlauben, so dass an dem ersten Anschluss 62 und an dem ersten Ausgangsanschluss 104 kein oder ein reduzierter Versorgungsdruck ansteht. Insbesondere kann das an dem ersten Ausgangsanschluss 104 anstehende Druckniveau und das an dem ersten Anschluss 62 anstehende Druckniveau in beliebigen Schritten bis auf 0 bar abgesenkt werden, wobei 0 bar dem Umgebungsdruck entspricht. Die Absenkung des Druckniveaus kann zur Bereitstellung einer stufbaren Feststellbremswirkung genutzt werden. Die Bistabilität des Ventils 10 bleibt unabhängig von dem an dem ersten Anschluss 62 bereitgestellten Versorgungsdruck erhalten, so dass auch bei einem geringen Versorgungsdruck keine druckbedingten Funktionsstörungen auftreten. Eine Betätigung der Feststellbremseinrichtung 54 ohne Verlust der aktuellen Fahrstellung ist daher unabhängig von einem Versorgungsdruck bis hinab zu 0 bar möglich. Das erste 2/2-Wegeventil 116 und das zweite 2/2-Wegeventil 118 können beispielsweise als zwangsgesteuerte Membranventile ausgeführt sein, wie sie häufig als ABS-Modulatoren eingesetzt werden, das heißt als ABS-Regelventile in einem Betriebsbremskreis eines Nutzfahrzeugs. Durch die Verwendung von Bauformen für das erste 2/2-Wegeventil 116 und das zweite 2/2-Wegeventil 118, wie sie beispielsweise bei ABS-Modulatoren bekannt sind, werden auch an dieser Stelle der Feststellbremseinrichtung 54 große Ventilquerschnitte bereitgestellt, die eine verbesserte Abfuhr von an Leckagen austretender Druckluft ermöglichen. Zur Robustheit der Feststellbremseinrichtung 54 gegen große Leckagen, zum Beispiel an einem angeschlossenen Anhängersteuerventil, ist es notwendig, dass alle Komponenten ausreichend große Querschnitte besitzen, um unerwünschte Luftmengen im System abzuführen oder Luftverluste durch unerwünschte Undichtigkeiten nachfördern zu können. Herkömmliche Magnetventile besitzen üblicherweise keine ausreichenden Querschnitte, insbesondere weil die Lufteinträge bei höherem Druck zugeführt, aber bei geringerem Druck abgeführt werden müssen. Die Verwendung eines ABS-Ventils, das heißt eines ABS-Modulators, in der Feststellbremseinrichtung 54 kann das Problem lösen, weil es über die Membran große Ventilquerschnitte schalten kann und zusätzlich genau die für die Ventileinrichtung 114 vorteilhafte Ventilkombination bietet, die in der Feststellbremseinrichtung 54 benötigt wird. Zudem ist das ABS-Ventil erprobt und kostengünstig.

An dem ersten Ausgangsanschluss 104 oder dem zweiten Ausgangsanschluss 110 kann je nach Bedarf jeweils ein Anhängersteuermodul angeschlossen werden, wobei eine nicht dargestellte Bremseinrichtung eines Anhängers durch das ebenfalls nicht dargestellte Anhängersteuermodul angesteuert wird. Der zur Ansteuerung des Anhängersteuermoduls verwendete Steuerdruck wird dabei entweder an dem ersten Ausgangsanschluss 104 oder an dem zweiten Ausgangsanschluss 110 bereitgestellt. Auf diese Weise können unterschiedliche Herstelleranforderungen hinsichtlich des bereitzustellenden Steuerdruckes für das Anhängersteuermodul mit einer einzigen Feststellbremseinrichtung 54 erfüllt werden. Der nicht benötigte Ausgangsanschluss, das heißt entweder der erste Ausgangsanschluss 104 oder der zweite Ausgangsanschluss 110 oder beide Ausgangsanschlüsse 104, 110, falls kein Anhänger an das Fahrzeug koppelbar sein soll, können je nach Bedarf verschlossen sein. Dies kann beispielsweise durch ein Verschließen der Leitungsanschlüsse erfolgen.

Die in Figur 10 dargestellte Feststellbremseinrichtung 54 befindet sich in einer Parkstellung, in der der zweite Anschluss 64 des Ventils 10 mit dem dritten Anschluss 64 des Ventils 10 gekoppelt ist, so dass der dritte Leitungsabschnitt 106 über die Entlüftung 112 drucklos ist. Dementsprechend liegt an dem pneumatischen Steuereingang 96 kein Steuerdruck an, so dass der Federspeicherbremszylinderanschluss 136 und der weitere Federspeicherbremszylinderanschluss 138 über die Entlüftung 112 des Relaisventils 94 entlüftet sind. Die an den beiden Federspeicherbremszylinderanschlüssen 136, 138 angeschlossen Federspeicherbremszylinder sind dementsprechend entlüftet, so dass die Feststellbremse geschlossen ist, das heißt eine Bremswirkung erzeugt. Während der zweite Anschluss 64 und der dritte Anschluss 66 miteinander gekoppelt sind, sind diese beiden Anschlüsse gegen den ersten Anschluss 62 abgetrennt, an dem ein über den Druckluftversorgungseingang 100 bereitgestellter Versorgungsdruck bereitgestellt sein kann. Eventuell am abgestellten Fahrzeug auftretende Vibrationen, die sich auf die Feststellbremseinrichtung 54 übertragen, gefährden den dargestellten Schaltzustand der Feststellbremseinrichtung 54 nicht, da sich das Ventil 10 wie im Zusammenhang mit den Figuren 1 und 6 beschrieben verhält. Der dargestellte Schaltzustand "Parken" ist daher sicher.

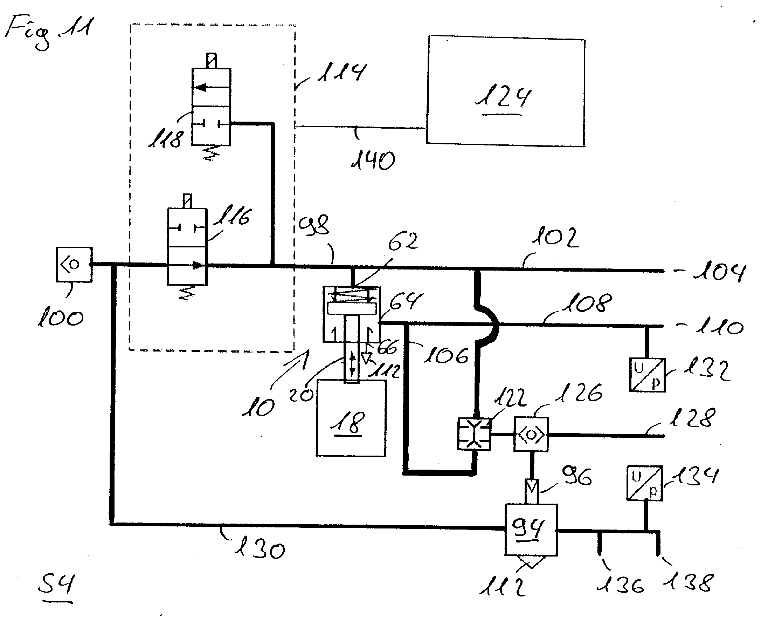

Figur 11 zeigt ein alternatives und nicht beanspruchtes Beispiel einer schematisch dargestellten elektrisch betätigbaren Feststellbremseinrichtung in einem ersten Schaltzustand. Anstelle der aus der Figur 10 bereits bekannten Bremstestventileinrichtung 120 ist bei der alternativen Ausführungsform gemäß Figur 11 ein Select-Low-Ventil 122 in dem dritten Leitungsabschnitt 106 vorgesehen, wobei der zweite Eingangsanschluss des Select-Low-Ventils 122 mit dem zweiten Leitungsabschnitt 102 gekoppelt ist. Das Select-Low-Ventil 122 kann hinsichtlich eines Anhängerbremstestes, das heißt hinsichtlich des Überprüfens, ob die Feststellbremse des Zugfahrzeuges das gesamte Fahrzeug einschließlich des Anhängers am Wegrollen hindern kann, die gleiche Funktionalität bereitstellen, wie die Bremstestventileinrichtung 120.

Die in der Figur 11 dargestellte Festbremseinrichtung 54 ist ebenfalls in einem Schaltzustand dargestellt, der beispielsweise einer Parkstellung zugeordnet werden kann, das heißt entlüfteten Federspeicherbremszylindern, die eine Bremskraft bewirken.

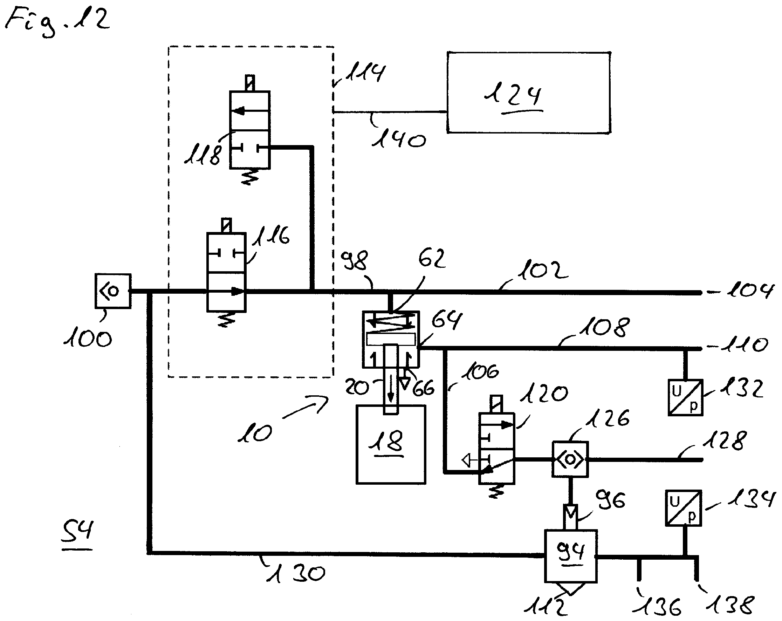

Figur 12 zeigt eine schematische Darstellung einer elektrisch betätigbaren Feststellbremseinrichtung in einem zweiten Schaltzustand. In der Figur 12 ist die Feststellbremseinrichtung 54 beim Übergang von einer Parkstellung in eine Fahrstellung dargestellt, bei der das Ventil 10 einen Druckluftpfad zwischen dem ersten Anschluss 62, an dem ein Versorgungsdruck ansteht, und dem zweiten Anschluss 64 freigibt, während gleichzeitig der dritte Anschluss 66 gegenüber den anderen beiden Anschlüssen 62, 64 abgesperrt wird. In der Figur 12 ist genau die Übergangsphase zwischen den beiden Schaltpositionen dargestellt. Um den Schaltvorgang zu bewirken, kann beispielsweise ein in dem Ventil 10 beweglich angeordnetes Schaltelement über den Trieb 20 durch den Elektromotor 18 in der in der Figur 12 angedeuteten Richtung bewegt werden. Dadurch kann beispielsweise das Schaltelement von einem ersten Ventilsitz abheben und nach Abschluss der Bewegung an einem zweiten Ventilsitz dicht anliegen. Der Elektromotor 18 kann insbesondere durch eine in der Figur 12 nicht dargestellte elektrische Leitung durch das elektronische Steuergerät 124 ansteuerbar sein. Es kann vorgesehen sein, dass der Elektromotor 18 nur bei einem Fahrzeugstillstand ansteuerbar ist, so dass eine Änderung des Betriebszustandes der Feststellbremseinrichtung 54 zwischen einer geöffneten und einer geschlossenen Feststellbremse nur im Stand möglich ist. Allgemein kann vorgesehen sein, dass eine Ansteuerung des Elektromotors 18 zur Änderung des Schaltzustandes des Ventils 10 nur bei einem stehenden Fahrzeug möglich sein kann.

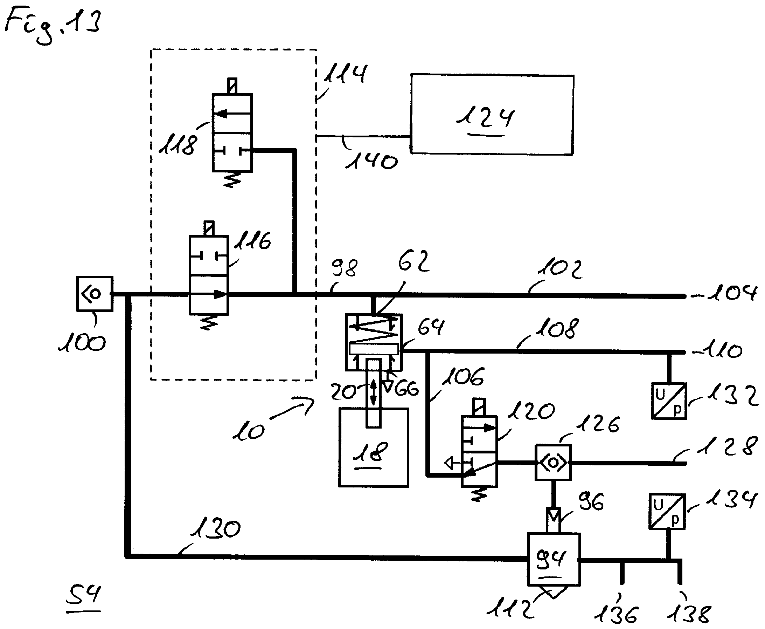

Figur 13 zeigt eine schematische Darstellung einer elektrisch betätigbaren Feststellbremseinrichtung in einem dritten Schaltzustand. Der in Figur 13 dargestellte Schaltzustand kann einer geöffneten Feststellbremse, das heißt belüfteten Federspeicherbremszylindern an den beiden Federspeicherbremszylinderanschlüssen 136, 138 zugeordnet werden und beispielsweise während der Fahrt des Fahrzeugs vorliegen. Der Schaltzustand des Ventils 10 entspricht im Wesentlichen den aus den Figuren 3 und 8 bekannten Schaltzuständen, bei denen der erste Anschluss 62 und der zweite Anschuss 64 des Ventils 10 miteinander verbunden sind, während der dritte Anschluss 66 gegenüber den anderen beiden Anschlüssen 62, 64 abgetrennt ist. Es kann vorgesehen sein, dass der Trieb 20 bei diesem Schaltzustand der Feststellbremseinrichtung 54 durch den Elektromotor 18 in eine Parkposition gefahren wird. Auf diese Weise kann das Schaltelement gegenüber dem Trieb 20 kraftfrei gelagert sein, so dass während der Fahrt auftretende Vibrationen des Fahrzeugs, die auf die Feststellbremseinrichtung 54 übertragen werden, zwar zu einer geringfügigen Bewegung des Triebs 20 führen können, diese jedoch nicht ausreichend sind, um eine Bewegung des Schaltelementes zu verursachen, die wiederum einen Druckverlust über den dritten Anschluss 66 verursachen würde. Der dritte Anschluss 66 bleibt sicher von den beiden anderen Anschlüssen 62, 64 getrennt. Dies ist in der Figur 13 durch den Doppelpfeil im Bereich des Triebs 20 schematisch angedeutet. Eine entsprechende Ausführungsform ist im Zusammenhang mit den in den Figuren 1 bis 9 dargestellten Ventilen 10 möglich.

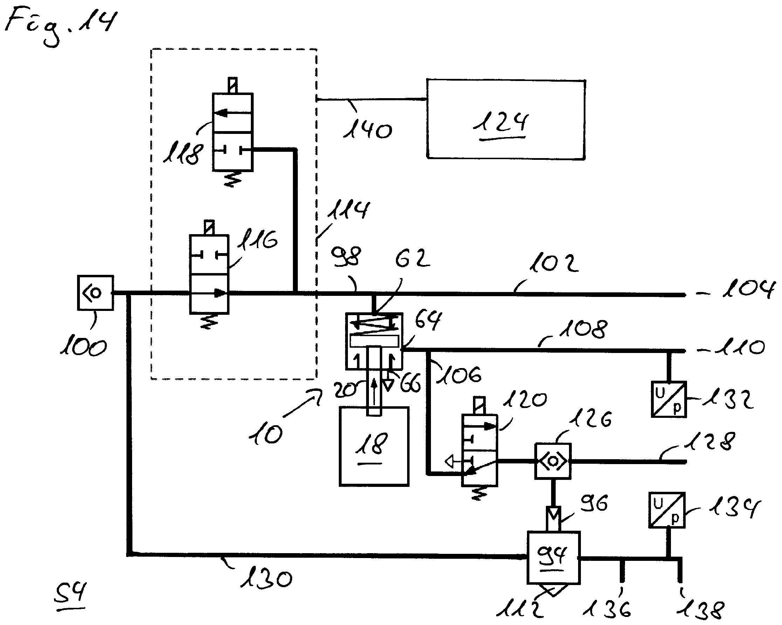

Figur 14 zeigt eine schematische Darstellung einer elektrisch betätigbaren Feststellbremseinrichtung in einem vierten Schaltzustand. Dargestellt ist in Figur 14 der Übergang der Feststellbremseinrichtung 54 von einer Fahrstellung in eine Parkstellung, bei der der dritte Leitungsabschnitt 106 über den dritten Anschluss 66 des Ventils 10 entlüftet wird, um eine Entlüftung der Federspeicherbremszylinderanschlüsse 136, 138 über die Entlüftung 112 des Relaisventils 10 zu verursachen. Zu diesem Zweck wird der Trieb 20 von dem Elektromotor 18 beispielsweise in der durch den Pfeil an dem Trieb 20 angedeuteten Richtung bewegt, um den dritten Anschluss 66 mit dem zweiten Anschluss 64 zu verbinden, wobei gleichzeitig der erste Anschluss 62, an dem ein Versorgungsdruck anstehen kann, abgetrennt wird. Beispielsweise kann ein bewegliches Schaltelement des Ventils 10 von einem Ventilsitz abgehoben werden und in der durch die Figur angedeuteten Weise in Richtung auf einen anderen Ventilsitz bewegt werden, um schließlich dicht an dem anderen Ventilsitz anzuliegen.

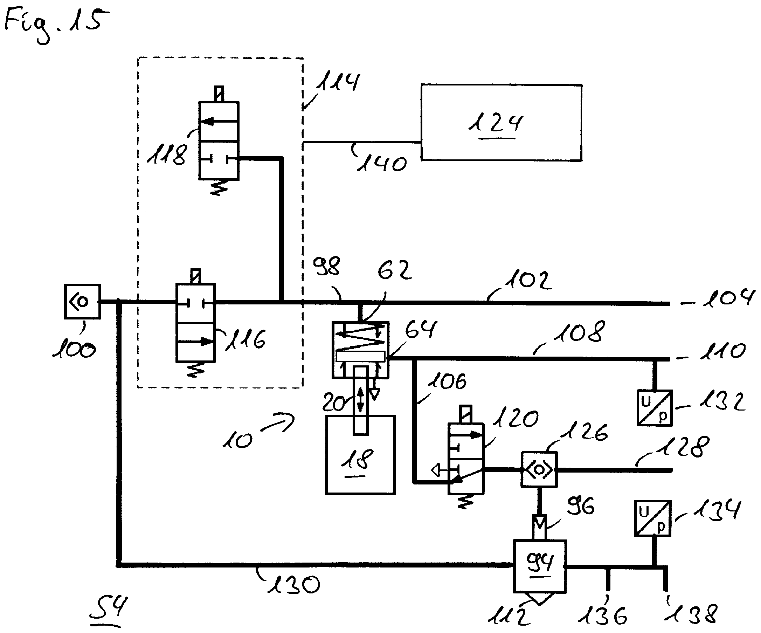

Figur 15 zeigt eine schematische Darstellung einer elektrisch betätigbaren Feststellbremseinrichtung in einem fünften Schaltzustand. Der in Figur 15 dargestellte Schaltzustand der Feststellbremseinrichtung 54 entspricht in weiten Teilen der aus der Figur 13 bekannten Fahrstellung der Feststellbremseinrichtung 54. Im Unterschied zur Figur 13 ist jedoch das erste 2/2-Wegeventil 116 der Ventileinrichtung 114 durch das elektronische Steuergerät 124 in seine Sperrstellung geschaltet, so dass der erste Leitungsabschnitt 98, der in den ersten Anschluss 62 des Ventils 10 mündet, von dem Druckluftversorgungseingang 100 abgetrennt ist. Durch ein gezieltes Druckablassen aus dem ersten Leitungsabschnitt 98 über das zweite 2/2-Wegevenitl 118 der Ventileinrichtung 114 kann nun sukzessiv eine Druckabsenkung in dem dritten Leitungsabschnitt 106 erfolgen, so dass auch an dem pneumatischen Steuereingang 96 des Relaisventils 94 eine graduelle Druckabsenkung entsprechend der abgelassenen Druckluftmenge erfolgen kann. Dies erlaubt ein teilweises Entlüften der an dem Federspeicherbremszylinderanschluss 136 und an dem weiteren Federspeicherbremszylinderanschluss 138 angeschlossenen Federspeicherbremszylinder über die Entlüftung 112 des Relaisventils 94, so dass die Bremswirkung der Feststellbremse durch die Feststellbremsvorrichtung 54 im Rahmen der durch die Federspeicherbremszylinder möglichen Bremskraft beliebig variierbar ist.

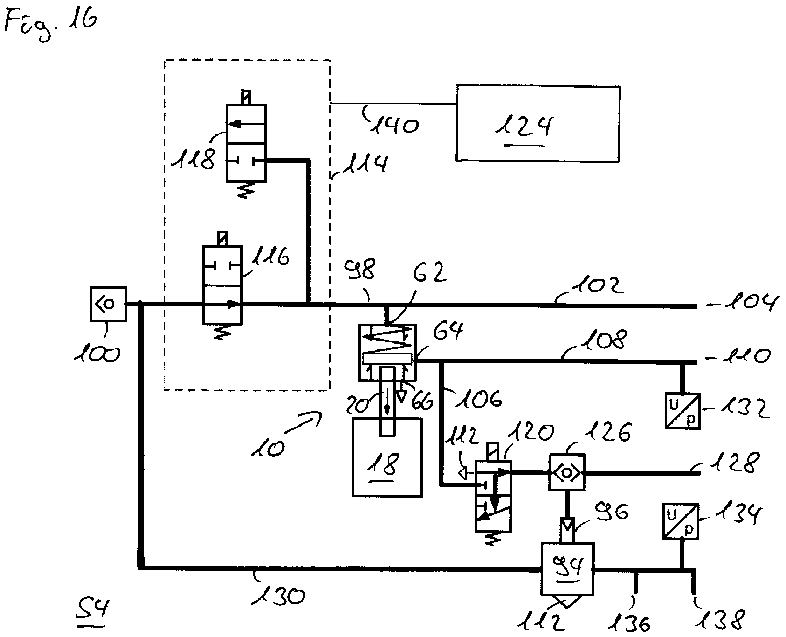

Figur 16 zeigt eine schematische Darstellung einer elektrisch betätigbaren Feststellbremseinrichtung in einem sechsten Schaltzustand. Der in der Figur 16 dargestellte sechste Schaltzustand der Feststellbremseinrichtung 54 entspricht im Wesentlichen der aus der Figur 12 bereits bekannten Fahrstellung, das heißt einer geöffneten Feststellbremse. Dementsprechend ist der erste Anschluss 62 mit dem zweiten Anschluss 64 verbunden, während der dritte Anschluss 66 gegenüber den beiden anderen Anschlüssen 62, 64 abgekoppelt ist. An dem ersten Ausgangsanschluss 104 und an dem zweiten Ausgangsanschluss 110 liegen beispielsweise übliche pneumatische Steuersignale für ein eventuell vorhandenes Anhängersteuermodul vor, die eine geöffnete Feststellbremse des Anhängers erlauben. Im Gegensatz zu der aus Figur 12 bekannten Schaltstellung befindet sich die Bremstestventileinrichtung 120 jedoch in einer anderen Schaltstellung, so dass der dritte Leitungsabschnitt 106 unterbrochen ist und der pneumatische Steueranschluss 96 des Relaisventils 94 über die Entlüftung 112 der Bremstestventileinrichtung 120 entlüftet wird. Dementsprechend werden die an dem ersten Federspeicherbremszylinderanschluss 136 und dem weiteren Federspeicherbremszylinderanschluss 138 angeschlossenen Federspeicherbremszylinder über die Entlüftung 112 des Relaisventils 94 entlüftet, so dass die Feststellbremse des Zugfahrzeugs betätigt wird. In diesem Schaltzustand ist das gesamte Fahrzeug, das heißt das Zugfahrzeug und ein eventuell vorhandener Anhänger, durch die Feststellbremse des Zugfahrzeugs zu sichern.

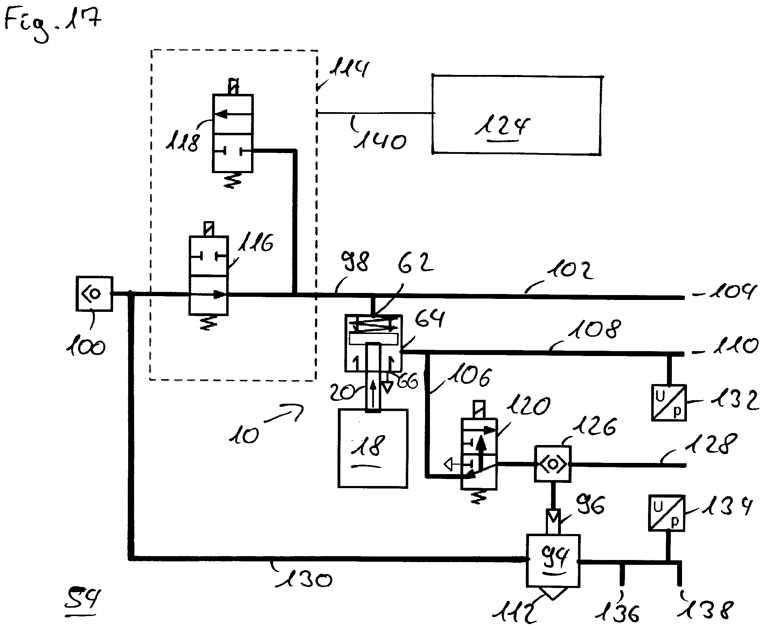

Figur 17 zeigt eine schematische Darstellung einer elektrisch betätigbaren Feststellbremseinrichtung in einem siebten Schaltzustand. Dargestellt ist das Ende des Anhängertests, wobei nun sowohl der dritte Leitungsabschnitt 106 als auch der vierte Leitungsabschnitt 108 mit dem zweiten Ausgangsanschluss 110 über den dritten Anschluss 66 des Ventils 10 entlüftet werden. Dies bewirkt das Schließen der Feststellbremse des Anhängers zusätzlich zu der Feststellbremse des Zugfahrzeugs.

Eine alternative Möglichkeit für einen Anhängertest ist für den Fachmann durch ein geeignetes Ansteuern der Ventileinrichtung 114 und des Ventils 10 möglich, wenn ein Anhängersteuermodul an dem ersten Ausgangsanschluss 104 angeordnet ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Ventil
- 12: Ventilgehäuse
- 14: axiale Richtung
- 16: Schaltelement
- 18: Elektromotor
- 20: Trieb
- 22: erster Ventilsitz
- 24: zweiter Ventilsitz
- 26: erste Schaltposition
- 28: zweite Schaltposition
- 30: Schlitten
- 32: Federkäfig
- 34: Feder
- 36: Sperrelement
- 38: weiterer Federkäfig
- 40: weitere Feder
- 42: Federkäfigdeckel
- 42': weiterer Federkäfigdeckel
- 44: Anschlag
- 46: weiterer Anschlag
- 48: Spiel
- 50: Kopfteil
- 52: Fußteil
- 54: Feststellbremseinrichtung
- 56: Dichtung
- 58: weitere Dichtung
- 60: Drossel
- 62: erster Anschluss
- 64: zweiter Anschluss
- 66: dritter Anschluss
- 68: Stab
- 70: Verbindungsstück
- 72: Gewinde
- 74: elektrischer Anschluss
- 76: Dichtring
- 78: Führung
- 80: Gehäusedichtung
- 82: Ventileinschub
- 84: weiterer Ventileinschub
- 86: Federkäfigboden
- 88: weiterer Federkäfigboden
- 90: Schlittensperre
- 92: weitere Schlittensperre
- 94: Relaisventil
- 96: pneumatischer Steuereingang
- 98: erster Leitungsabschnitt
- 100: Druckluftversorgungseingang
- 102: zweiter Leitungsabschnitt
- 104: erster Ausgangsanschluss
- 106: dritter Leitungsabschnitt
- 108: vierter Leitungsabschnitt
- 110: zweiter Ausgangsanschluss
- 112: Entlüftung
- 114: Ventileinrichtung
- 116: erstes 2/2-Wegeventil
- 118: zweites 2/2-Wegeventil
- 120: Bremstestventileinrichtung
- 122: Select-Low-Ventil
- 124: elektronisches Steuergerät
- 126: Select-High-Ventil
- 128: pneumatische Steuerleitung
- 130: Druckversorgungsleitung
- 132: erster Drucksensor
- 134: zweiter Drucksensor
- 136: Federspeicherbremszylinderanschluss
- 138: weiterer Federspeicherbremszylinderanschluss
- 140: elektrische Steuerleitung

## Patentansprüche

1. Elektrisch betätigbare Feststellbremseinrichtung (54) für ein Fahrzeug, umfassend ein elektrisch betätigbares bistabiles Ventil (10) mit
- einem ersten Anschluss (62), der über einen ersten Leitungsabschnitt (98) mit einem Druckluftversorgungseingang (100) der Feststellbremseinrichtung (54) gekoppelt ist und über einen zweiten Leitungsabschnitt (102) mit einem ersten Ausgangsanschluss (104) für ein Anhängersteuermodul gekoppelt ist,
- einem zweiten Anschluss (64), der über einen dritten Leitungsabschnitt (106) direkt oder indirekt eine Druckänderung an einem Federspeicherbremszylinderanschluss (136) bewirkt und der über einen vierten Leitungsabschnitt (108) mit einem zweiten Ausgangsanschluss (110) für ein Anhängersteuermodul gekoppelt ist,
- einem dritten Anschluss (66), der mit einer Entlüftung (112) gekoppelt ist,
- wobei weiterhin ein Relaisventil (94) mit einem pneumatischen Steuereingang (96) vorgesehen ist, wobei der pneumatische Steuereingang (96) mit über den dritten Leitungsabschnitt (106) mit dem zweiten Anschluss (64) gekoppelt ist, um die Druckänderung an dem Federspeicherbremszylinderanschluss (136) indirekt zu bewirken,
**dadurch gekennzeichnet, dass** ein Elektromotor (18), der über einen Trieb (20) das elektrisch betätigbare bistabile Ventil (10) zwischen einer ersten Schaltposition (26) und einer zweiten Schaltposition (28) schaltet, und dass im dritten Leitungsabschnitt (106) eine Bremstestventileinrichtung (120) angeordnet ist, die geeignet ist, den pneumatischen Steuereingang (96) unabhängig von einem am zweiten Anschluss (64) bereitgestellten Druckniveau zu entlüften.

2. Elektrisch betätigbare Feststellbremseinrichtung (54) nach Anspruch 1, **dadurch gekennzeichnet, dass** in dem ersten Leitungsabschnitt (98) eine Ventileinrichtung (114) angeordnet ist, die dazu geeignet ist, die Feststellbremseinrichtung (54) von dem Druckluftversorgungseingang (100) zu trennen und den ersten Leitungsabschnitt (98) zu entlüften.

3. Elektrisch betätigbare Feststellbremseinrichtung (54) nach Anspruch 2, **dadurch gekennzeichnet, dass** die Ventileinrichtung (114) ein erstes 2/2-Wegeventil (116) und ein zweites 2/2-Wegeventil (118) umfasst.

4. Elektrisch betätigbare Feststellbremseinrichtung (54) nach Anspruch 3, **dadurch gekennzeichnet, dass** das erste 2/2-Wegeventil (116) und/oder das zweite 2/2-Wegeventil (118) als zwangsgesteuerte Membranventile ausgeführt sind.

5. Elektrisch betätigbare Feststellbremseinrichtung (54) nach einem der vorhergehenden Ansprüche, **dadurch gekennzeichnet, dass** die Feststellbremseinrichtung (54) ein elektronisches Steuergerät (124) umfasst.

6. Elektrisch betätigbare Feststellbremseinrichtung (54) nach einem der vorhergehenden Ansprüche, **dadurch gekennzeichnet, dass** in dem dritten Leitungsabschnitt (106) ein Select-High-Ventil (126) angeordnet ist, welches weiterhin mit einer Steuerleitung (128) aus einem Betriebsbremskreis gekoppelt ist.

## Claims

1. An electrically actuatable parking brake device (54) for a vehicle, comprising an electrically actuatable bistable valve (10) having
- a first port (62) that is connected via a first line section (98) to a compressed air supply inlet (100) of the parking brake device (54) and via a second line section (102) to a first output port (104) for a trailer control module,
- a second port (64) that directly or indirectly effects a change in pressure at a spring-loaded brake cylinder port (136) via a third line section (106) and is connected via a fourth line section (108) to a second output port (110) for a trailer control module,
- a third port (66) that is connected to an air vent (112),
- there also being provided a relay valve (84) having a pneumatic control inlet (96), this pneumatic control inlet (96) being connected via the third line section (106) to the second port (64) in order indirectly to effect the change in pressure at the spring-loaded brake cylinder port (136),
**characterised in that** an electric motor (18) switches the electrically operated bistable valve (10) between a first switching position (26) and a second switching position (28) via a drive (20), and that arranged in the first line section (106) is a brake test valve device (120) suitable for venting the pneumatic control inlet (96) independently of a pressure level provided at the second port (64).

2. An electrically actuatable parking brake device (54) according to claim 1, **characterised in that** arranged in the first line section (98) is a valve device (114) suitable for separating the parking brake device (54) from the compressed air supply input (100) and venting the first line section (98).

3. An electrically actuatable parking brake device (54) according to claim 2, **characterised in that** the valve device (114) comprises a first 2/2-way valve (116) and/or the second 2/2-way valve (118).

4. An electrically actuatable parking brake device (54) according to claim 3, **characterised in that** the first 2/2-way valve (116) and/or the second 2/2-way valve (118) take the form of forcibly controlled diaphragm valves.

5. An electrically actuatable parking brake device (54) according to any one of the preceding claims, **characterised in that** the parking brake device (54) comprises an electronic control device (124).

6. An electrically actuatable parking brake device (54) according to any one of the preceding claims, **characterised in that** arranged in the third line section (106) is a select-high vale (126) that is, in addition, connected to a control line (128) from a service brake circuit.

## Revendications

1. Dispositif (54) de frein de stationnement pouvant être actionné électriquement d'un véhicule, comprenant une soupape (10) bistable pouvant être actionnée électriquement, ayant
- un premier raccord (62), qui est couplé par un premier tronçon (98) de conduit à une entrée (100) d'alimentation en air comprimé du dispositif (54) de frein de stationnement et qui est couplé par un deuxième tronçon (102) de conduit à un premier raccord (104) de sortie d'un module de commande de remorque,
- un deuxième raccord (64), qui provoque, par un troisième tronçon (106) de conduit, directement ou indirectement, une variation de pression à un raccord (136) de cylindre de frein à ressort accumulateur et qui est couplé par un quatrième tronçon (108) de conduit à un deuxième raccord (110) de sortie d'un module de commande de remorque,
- un troisième raccord (66), qui est couplé à une purge (112),
- dans lequel il est prévu, en outre, une vanne (94) relais, ayant une entrée (96) de commande pneumatique, l'entrée (96) de commande pneumatique étant couplée au deuxième raccord (64) par le troisième tronçon (106) de conduit, afin de provoquer indirectement la variation de pression au raccord (136) de cylindre de frein à ressort accumulateur,
**caractérisé en ce qu'**un moteur (18) électrique, qui fait passer, par un actionnement (20), la soupape (10) bistable pouvant être actionnée électriquement entre une première position (26) de commutation et une deuxième position (28) de commutation et **en ce qu'**il est monté, dans le troisième tronçon (106) de conduit, un dispositif (120) de soupape de test de frein, propre à mettre à l'atmosphère l'entrée (96) de commande pneumatique, indépendamment d'un niveau de pression mis à disposition au deuxième raccord (64).

2. Dispositif (54) de frein de stationnement pouvant être actionné électriquement suivant la revendication 1, **caractérisé en ce qu'**il est monté, dans le premier tronçon (98) de conduit, un dispositif (114) de soupape propre à séparer le dispositif (54) de frein de stationnement de l'entrée (100) d'alimentation en air comprimé et à mettre à l'atmosphère le premier tronçon (98) de conduit.

3. Dispositif (54) de frein de stationnement pouvant être actionné électriquement suivant la revendication 2, **caractérisé en ce que** le dispositif (114) de soupape comprend une première soupape (116) à 2/2 voies et une deuxième soupape (118) à 2/2 voies.

4. Dispositif (54) de frein de stationnement pouvant être actionné électriquement suivant la revendication 3, **caractérisé en ce que** la première soupape (116) à 2/2 voies et/ou la deuxième soupape (118) à 2/2 voies sont réalisées sous la forme de soupape à membrane à commande forcée.

5. Dispositif (54) de frein de stationnement pouvant être actionné électriquement suivant l'une des revendications précédentes, **caractérisé en ce que** le dispositif (54) de frein de stationnement comprend un appareil (124) électronique de commande.

6. Dispositif (54) de frein de stationnement pouvant être actionné électriquement suivant l'une des revendications précédente, **caractérisé en ce que**, dans le troisième tronçon (106) de conduit, est monté une soupape (126) Select-High, qui est couplée, en outre, à un conduit (128) de commande d'un circuit de frein de service.
